# EUROPEAN PATENT APPLICATION

(11) **EP 4 024 229 A1**
(43) Date of publication of application: **06.07.2022**
(21) Application number: 21216832.2
(22) Date of filing: 22.12.2021
(51) Int. Cl.: G06F 16/29, G06Q 10/06, G06Q 50/16

(54) **PROCESSING GEOSPATIAL DATA**

(30) Priority: 22.12.2020 GB 202020480
(71) Applicant: Modumos Limited, Poole BH14 8RZ (GB)
(72) Inventor: BOWDLER, Peter Thomas, Poole, BH14 8RZ (GB); MOREY, Edwin, Poole, BH14 8RZ (GB)

(57) **Abstract**

A method of automatically processing geospatial data may be implemented by apparatus comprising a processor, storage and memory. Base geospatial data is obtained relating to plots of land and buildings, and first geospatial data is identified describing a first real-world plot of land and second geospatial data is identified describing a first real-world building standing on it, the building having an unknown real-world orientation. Using the second geospatial data, a first polygon is created that encompasses the building. Using the first geospatial data, a portion polygon is identified that is not in the first polygon, which defines a portion of the plot of land. Its orientation with respect to the real-world orientation of the building is identified. The portion polygon and data relating to the portion of the plot of land are stored for display.

## Description

### CROSS REFERENCE TO RELATED APPLICATIONS

This application claims priority from UK Patent Application No. 20 20 480.6, filed 22 December 2020.

### BACKGROUND OF THE INVENTION

The present invention relates to a system and method for automatically processing geospatial data.

Geospatial data describing and defining plots of land across the world is created and stored by various agencies, some private and some governmental. Similarly, mapping data describing features on a landscape such as roads and buildings is defined by geospatial data and can be used to generate maps for display online and in print.

Frequently, plots of land on which buildings stand are large enough to be segmented so that additional buildings can be constructed. However, there is currently no way of automatically identifying such plots of land.

### BRIEF SUMMARY OF THE INVENTION

According to a first aspect of the present invention, there is provided a method of processing geospatial data according to claim 1. According to a second aspect of the present invention, there is provided apparatus for processing geospatial data according to claim 14. According to a third aspect of the present invention, there is provided instructions for a computer according to claim 15. According to a fourth aspect of the present invention, there is provided a computer readable medium comprising instructions according to claim 16.

Embodiments of the invention will be described, by way of example only, with reference to the accompanying drawings. The detailed embodiments show the best mode known to the inventor and provide support for the invention as claimed. However, they are only exemplary and should not be used to interpret or limit the scope of the claims. Their purpose is to provide a teaching to those skilled in the art. Components and processes distinguished by ordinal phrases such as "first" and "second" do not necessarily define an order or ranking of any sort.

### BRIEF DESCRIPTION OF THE SEVERAL VIEWS OF THE DRAWINGS

Figure 1 illustrates an environment in which the invention may be implemented;
Figure 2 is a schematic illustration of communications between devices shown in Figure 1;
Figure 3 shows steps carried out by a processor of the data generation system shown in Figure 1;
Figure 4a is a schematic illustration of a base database shown in Figure 2;
Figure 4b is a schematic illustration of a working database shown in Figure 2;
Figure 5 details steps carried out during Figure 3 to generate potential plot data;
Figure 6 details steps carried out during Figure 5 process a candidate plot;
Figure 7a and 7b illustrate steps carried out during Figure 6;
Figure 8 details steps carried out during Figure 6 to define potential plot;
Figure 9 illustrates steps carried out during Figure 8;
Figure 10 details steps carried out during Figure 6 to orientate a candidate plot;
Figures 11 a and 11b illustrate steps carried out during Figure 10;
Figure 12 details steps carried out during Figure 10 to identity left and right side plots;
Figure 13 illustrates steps carried out during Figure 12;
Figure 14 details steps carried out during Figure 6 to further process a potential plot;
Figure 15 details steps carried out during Figure 14 to process a rear plot;
Figure 16 illustrates steps carried out during Figure 15;
Figure 17 details steps carried out during Figure 15 to identify side access details;
Figure 18 illustrates steps carried out during Figure 17;
Figure 19 details steps carried out during Figure 15 to identify rear access details;
Figure 20a, 20b, 20c and 20d illustrate steps carried out during Figure 19;
Figure 21a details steps carried out during Figure 14 to process a side plot;
Figure 21b details steps carried out during Figure 21a to identify the most suitable part of a side plot;
Figures 22a and 22b illustrate steps carried out during Figure 21b;
Figure 23 details steps carried out during Figure 3 to generate assembled plots;
Figure 24a and 24b illustrate steps carried out during Figure 23;
Figure 25 is a schematic illustration of a live database and a user database shown in Figure 2;
Figure 26 details steps carried out during Figure 3 to update the live database shown in Figure 25;
Figure 27 is a schematic illustration of component processes of a server process shown in Figure 2;
Figure 28 details a user notification process shown in Figure 27
Figure 29 details steps carried out during Figure 21 to check if a side plot is usable;
Figure 30 details steps carried out during Figure 29 to check if a plot is on a corner;
Figure 31 illustrates steps carried out during Figure 30;
Figure 32 details steps carried out during Figure 29 to check if a plot is on a bend;
Figures 33a to 33c illustrates steps carried out during Figure 32;
Figure 34 also illustrates steps carried out during Figure 32;
Figure 35 details steps carried out during Figure 21 to identify access details;
Figure 36 illustrates steps carried out during Figure 35;
Figure 37 details steps carried out during Figure 14 to perform optional checks on a processed plot;
Figure 38 details steps carried out during Figure 37 to check whether a fire suppression system is required; and
Figure 39 illustrates steps carried out during Figure 38.

### DETAILED DESCRIPTION OF EMBODIMENTS OF THE INVENTION

### Figure 1

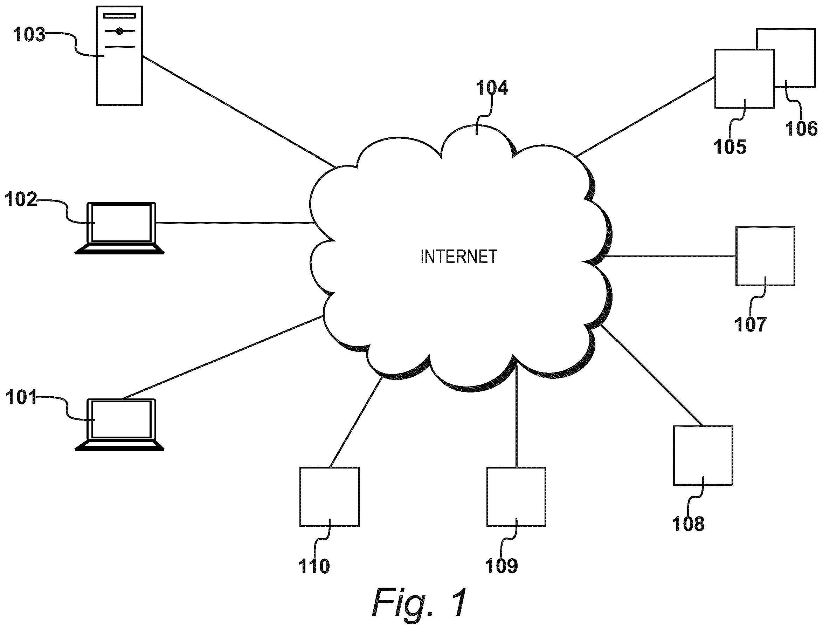

An environment in which the invention may be implemented is illustrated in Figure 1. Terminals, such as computer **101,** computer **102,** and mobile device **103,** are connected to the internet **104.** The users of these terminals wish to search for usable plots of land on which buildings may be constructed.

Data relating to such plots of land is generated by data generation station **105,** and stored on its local server **106** and on a remote server **107.** Servers **106** and **107** may service the same users or different sets of users.

Geospatial data used by data generation server **105** is imported from land data server **108** and feature data server **109.** Additional information relating to the geospatial data may be imported from one or more additional data locations, represented here by server **110.**

Intermediate connection devices such as gateways, cellular towers, internet service providers, etc are not shown in this Figure, and any suitable method of connecting to the internet could be used. Alternatively, connection could be made through other networks other than the internet, and one or more of the servers could be co-located.

### Figure 2

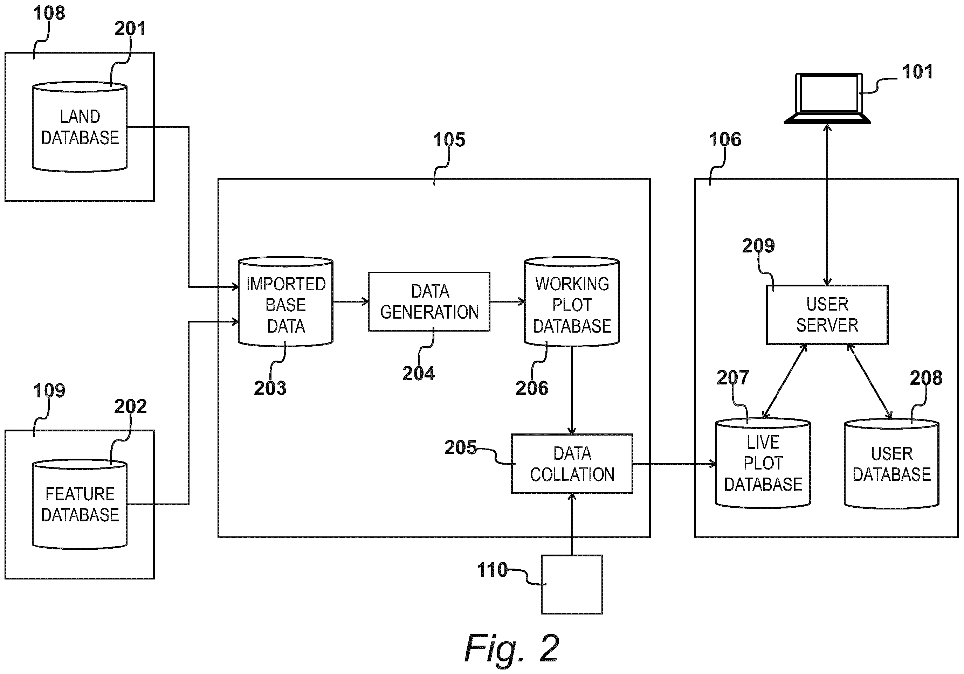

Communications between devices shown in Figure 1 are shown schematically in Figure 2. Land data server **108** stores a land database **201,** which includes geospatial data describing plots of land. Feature data server **109** holds feature database **202,** which includes geospatial data describing features of the landscape corresponding geographically to the geospatial data of land database **201**. These databases are separate and must be collated by data generation station **105.** However, in other embodiments these databases could be located on the same server, or the land and feature data could be stored in a single database.

Data generation station **105** imports data from land database **201** and feature database **202** and stores it as imported base data **203**. Base data **203** is refreshed whenever one of databases **201** or **202** is updated.

A data generation process **204** runs on station **105,** which generates geospatial data relating to usable plots of land and stores it in working plot database **206** on station 105.

A second process on station **105,** data collation process **205,** collates data from working database **204** and pushes it to live plot database **207** on server **106**. Data collation process **205** may also fetch data from other locations **110** for storage on live database **207**. The same live data is pushed to a database on remote server **107**.

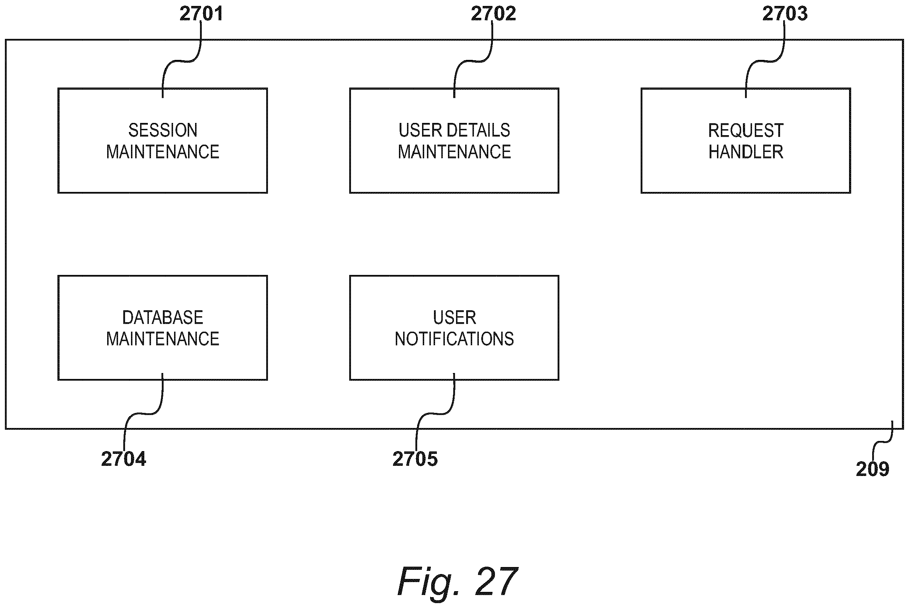

Server **106** stores, in addition to live database **207,** a database of users 208. A server process **209** carries out various server functions, such as serving user requests, creating and updating records in user database **208,** and so on, and will be described further with reference to Figure 27. A user request may be for a search based on user-provided filters, for information on a particular plot, to save a plot in a user's list, and so on.

Thus, data generation station **105** imports base geospatial data from servers **108** and **109** and generates geospatial data for storage in live database **207.** Typically, the processes on data generation station **105** run whenever one of databases **201** or **202** is updated. Meanwhile, server **106**, and similarly server **107**, provide the latest data to users in response to user requests.

Any other arrangement of the databases and processes could be used, and the design would depend upon the location of the base databases, the capabilities of the computing systems being used, the bandwidth of the local network, and so on.

### Figure 3

In this embodiment, data processing station is a computing system that includes a processor, memory and storage. Databases **203** and **206** may be stored on the storage, or may be on dedicated internal or external storage. They may also be on networked devices. Thus, data generation station **105** may be a single computing system or may be a network of devices. In addition, it may include more than one processor and more than one memory, or it may be a distributed system. Thus, reference herein to a processor may be to a single CPU or a plurality of processing devices, which may be contained in the same computing device or in a network of devices; similarly reference to a memory may be to one or more memory devices, and reference to storage may be to one or more storage devices.

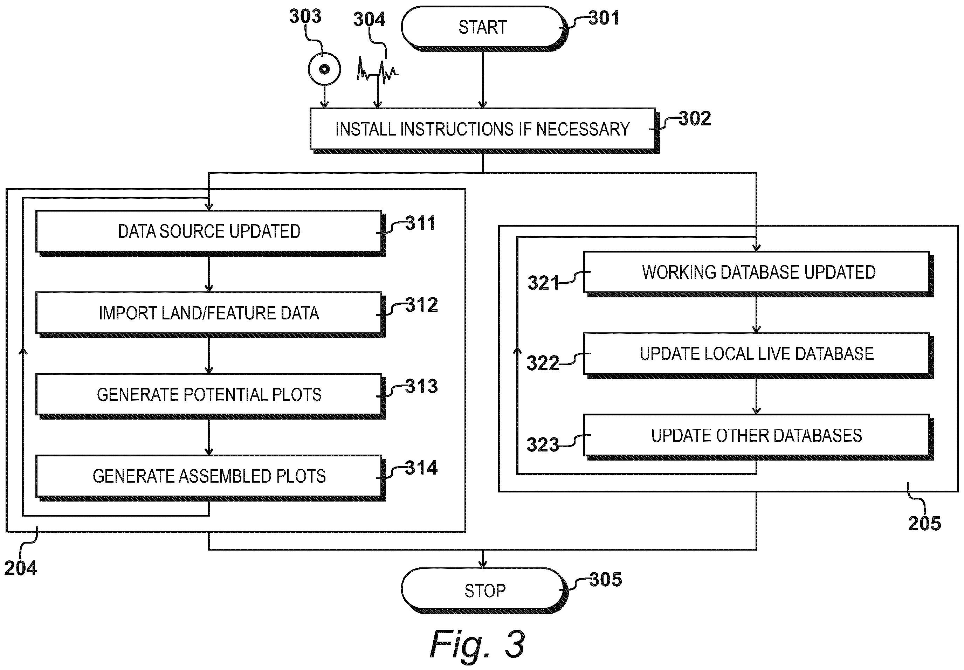

Figure 3 shows steps carried out by the processor of data generation system **105** to implement the invention. At step **301** the station is switched on and at step **302** instructions are installed if necessary. These may be installed from a physical medium such as CD-ROM **303**, or from a networked location **304**. These instructions are stored in storage, and loaded into memory to be run.

Data generation station **105** runs, in addition to many background processes and other processes not described herein, data generation process **204** and data collation process **205**.

Data generation process **204** includes step **311** at which the process is notified that one or more of the data sources **201** and **202** has been updated, step **312** at which the data is imported, and steps **313** and **314** at which potential plots and assembled plots are generated respectively. The process then waits for notification of another update. As an alternative to an interrupt being received at step **311,** each iteration of process **204** may be initiated by a user.

Data collation process **205** includes step **321** at which it is notified that working plot database **206** has been updated, step **322** at which it compares working database **206** with live database **207** to update old, edited or new data, and step **323** at which it pushes these updates to other live plot databases, such as on server **107**. The process then waits to be notified of another update to working database **206**. As an alternative to an interrupt being received at step **321,** each iteration of process **205** may be initiated by a user. It may be appropriate for process **205** to run overnight to avoid data outages being experienced by users.

Processes **204** and **205** both run until such time as data generation station **105** is switched off at step **305**.

The separation of the functions of data generation station **105** into two separate processes as illustrated here allows for efficient data generation. However, it could be split into many more processes, and the processes could be split over more than one computing system.

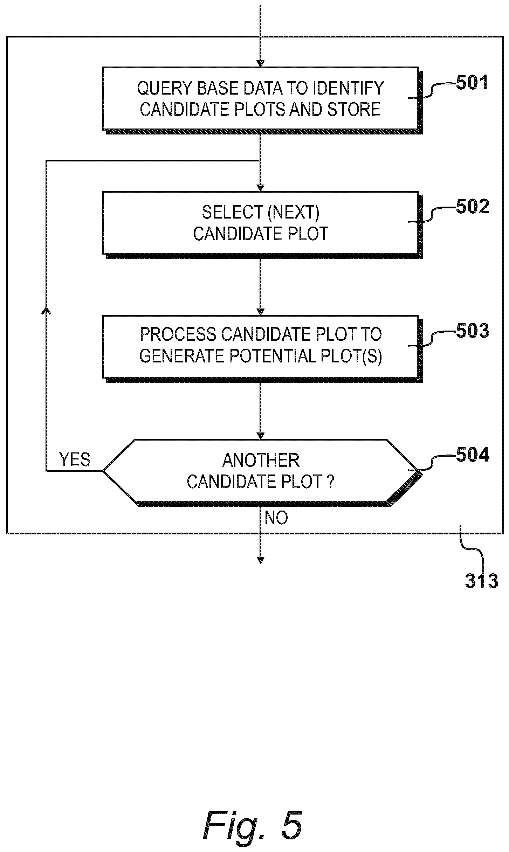

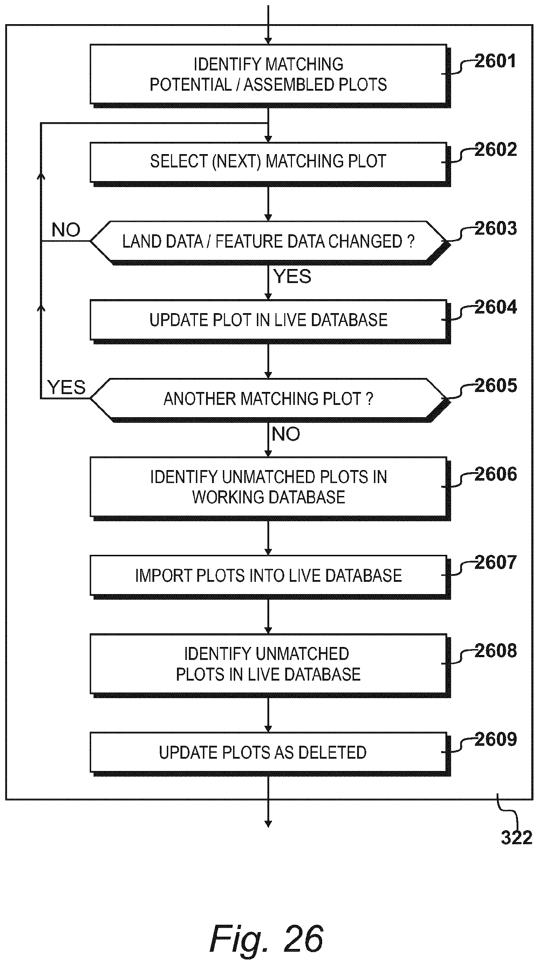

Data generation process **204** will be described with reference to Figures 5 to 24b, while data collation process **205** will be described with respect to Figure 26.

### Figure 4a

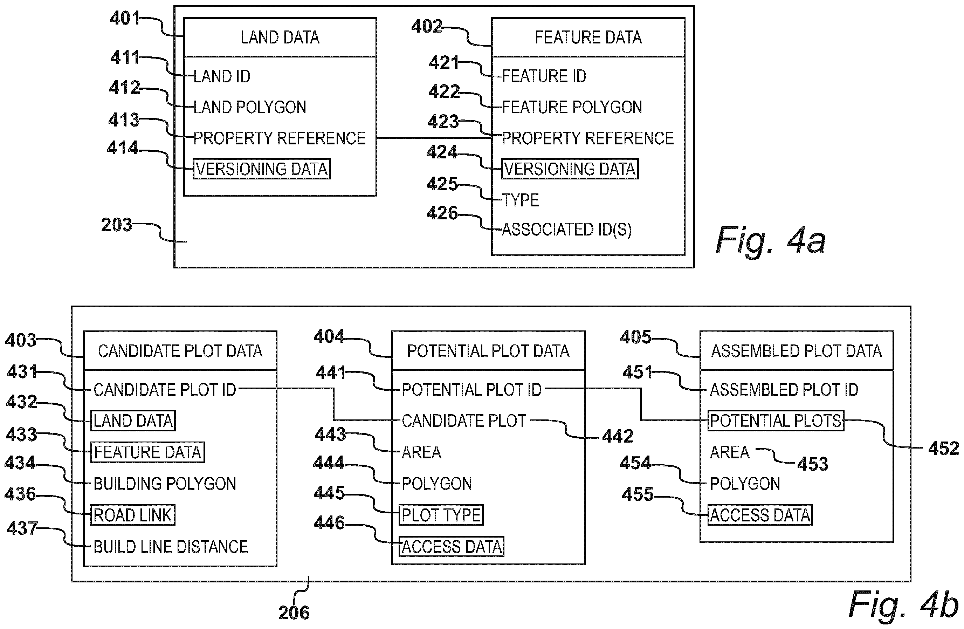

Imported base data **203** is shown schematically in Figure 4a. It includes land data **401** imported from land database **201** and feature data **402** imported from feature database **202**. Two tables are shown in Figure 4, but the data may be stored in any suitable format. Together, land data **401** and feature data **402** comprise base geospatial data. It should be noted that the term "geospatial data" means any data that has a geographic component to it. In this description, it is used to mean data that includes a area defined in some way and other data associated with that area.

Each record in land data **401** includes a land ID **411**, a land polygon **412**, a property reference **413** and versioning data **414**. This data may be a copy of records in land database **201,** or it may be the result of a query run on that database.

The land ID is a unique identifier that identifies a plot of land defined by land polygon **412,** which is a set of coordinates. The coordinates are stored in order and may be joined by lines in a clockwise direction to create the polygon. Each coordinate identifies a point in the area under consideration; the absolute latitude or longitude may be used, or a local coordinate system. As an example, mapping data produced in the United Kingdom uses a two-dimensional coordinate system having an origin at 49°N, 2°W, to avoid the use of negative numbers. A polygon defined by coordinates is a typical way of storing geospatial data, but other storage methods may be used.

Each record in feature data **402** includes a feature ID **421,** a feature polygon **422,** a property reference **423,** versioning data **424,** the type of feature **425** and any associated feature IDs **426.** Again, this data may be a direct import from feature database **202,** or may be the result of a query.

Feature ID **421** is a unique identifier, and feature polygon **422** is geospatial data stored in the same way as land polygon **412.** Again, other storage methods may be used. However, it is preferable that land polygon **412** and feature polygon **422** are stored in the same format, and therefore conversion may be necessary during the import step if databases **201** and **202** use different formats.

Property reference **423** can be linked by a database relationship to property reference **413.** In the real world, if a building stands on a plot of land that is owned, then both the plot of land and the building are given the same property reference. This allows buildings and plots of land to be linked. This property reference may be present in databases **201** and **202.** It is not, then the imported data will need to be processed to find feature polygons that are contained within land polygons and thereby generate property references.

Type field **425** indicates the type of feature. Mapping data includes all physical features, and therefore the feature could be a building, a road, a river, a high point, a telephone box or any other feature that appears on a map. Buildings may be further indicated as residential or commercial.

In addition, some features are associated with other features, and this is indicated in field **426.** For example, a building is associated with a road, indicating its postal address.

The data structure **203** of imported base data is updated when necessary at step **312.** In this embodiment the entire updated database, either database **201** or **202,** is imported to replace the records in database **203** or **204** respectively. As an alternative, modified data could be selectively imported based on comparisons between the versioning data in the original database and the imported data. The base data **203** is processed at steps **313** and **314** to produce and update working plot database **206.**

Thus there exists first geospatial data describing a plot of land, which in this example is land polygon **412** and its associated data in land data **401,** and second geospatial data describing a building standing on it, which in this example is feature polygon **422** and its associated data in feature data **402.** In other embodiments, the first and second geospatial data may be defined in other ways.

### Figure 4b

Working plot database **206** is shown schematically in Figure 4b. It is shown here for simplicity as three tables, but the data can be stored in any suitable way.

Each data record will be briefly described here, and further elaborated upon in the following Figures where it is described how the working data is generated. The data comprises three tables, table **403** of candidate plots, table **404** of potential plots, and table **405** of assembled plots.

Candidate plot data **403** is assembled by querying base data **203** to find suitable plots of land. Each record is given a candidate plot ID **431,** and some or all of the land data and feature data is imported at locations **432** and **433.** Locations **423** and **433,** and others, are shown in a box to indicate that the data includes more than one field, which may be included in this table or may be in a linked table. When referring to the data in locations **432** and **433,** the reference numerals from Figure 4a will be used, but it should be understood that it is the corresponding data that has been imported into table **403** that is being referred to.

Geospatial data indicating a building polygon is at **434,** road link data is at **435,** and a build line distance is at **436.**

Candidate plot data **403** is processed further to generate potential plot data **404.** Each potential plot is a portion of an existing plot of land, which may or may not be suitable for constructing a building on. Thus, each record has a potential plot ID **441,** a link **442** to a candidate plot, the area of the potential plot **443,** geospatial data describing it at **444,** and plot type data, including the type of plot (e.g. front, rear, side) and whether it is usable or not is at **445.** Data relating to potential vehicular access to the plot is at **446.**

Once the potential plots have been generated at step **313,** an additional generation step takes place at **314** to create assembled plot data **405.** Each assembled plot is defined by a number of adjacent potential plots which could be used as a single plot. Thus each record in the data **405** includes an assembled plot ID **451,** a number of links **452** to potential plots **404,** the area of the plot **453** and its defining polygon **544,** and data regarding access **455.**

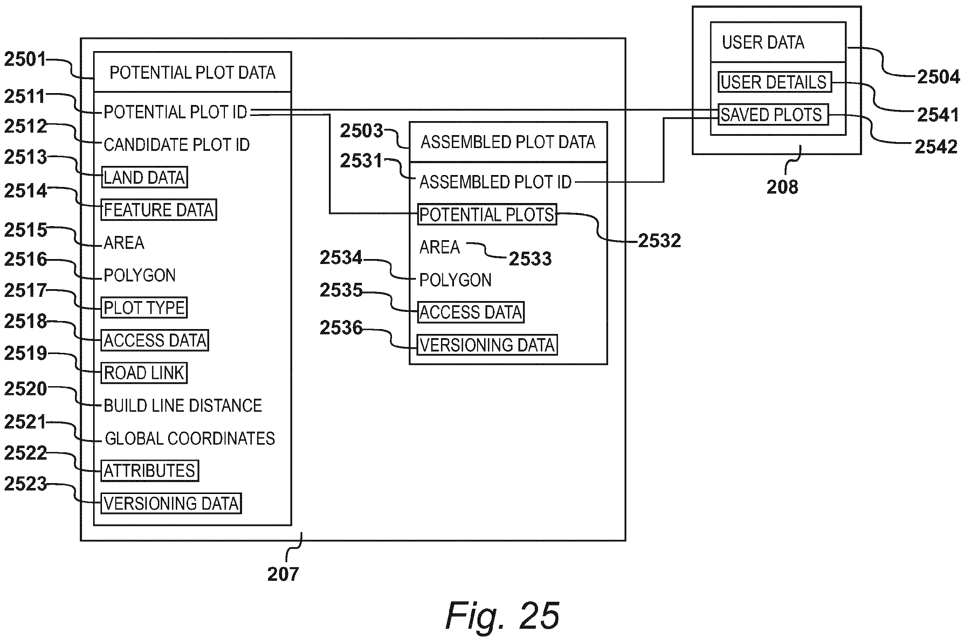

After all this data has been generated by process **204,** process **205** collates the data that is changed when compared with live plot database **207,** such as plots that are new, deleted or modified. This information is then pushed out to the live databases. Live database **207** will described with reference to the schematic in Figure 25.

In another embodiment, data generation process could query the base data **203** to identify land data and feature data that is changed since the last update, and process only that data to create candidate plots and potential plots. This would be useful if the time taken to process the entirety of the base data were longer than the time between updates of the databases.

### Figure 5

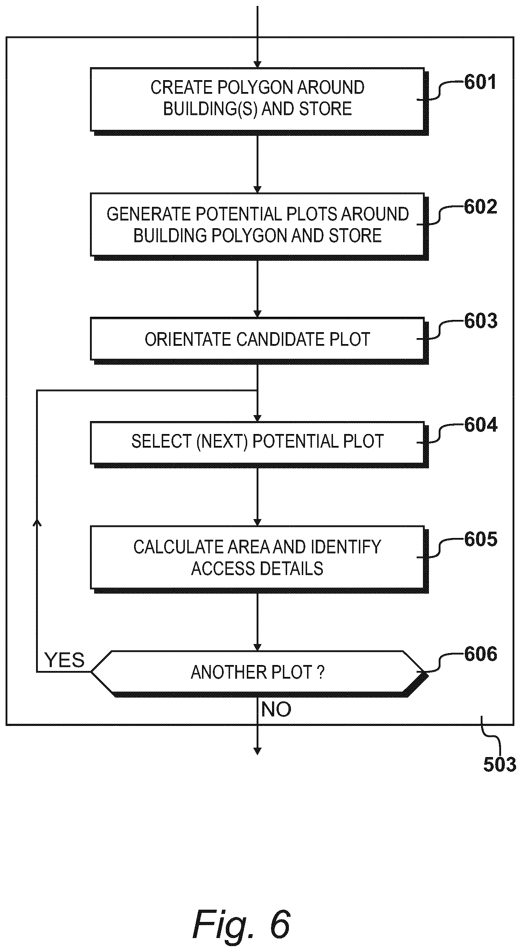

Step **313,** at which potential plot data **404** is generated, is shown in Figure 5, and will be further detailed in Figures 6 to 22. At step **501** the imported base data **203** is queried to identify candidate plots, which are stored in table **403.** In this embodiment, candidate plots are those on which a residential building stands; in other embodiments commercial buildings and even plots without buildings could be included as well. In this embodiment, as previously described, all candidate plots are processed to generate potential plots, which are then compared with live database **207** to collate changes. If only updated data is required, then the versioning data would also be queried to identify candidate plots that have been changed since the last time process **204** was run.

Candidate plots discovered by querying databases **201** and **202** are stored in data table **401,** as shown in Figure 4a. Candidate plot ID **431** is generated by concatenating land ID **411** and feature ID **421.** In other embodiments this ID could be hashed or otherwise normalised. Relevant land data is imported into location **432;** this must include at least the land polygon **412** and versioning data **414.** Relevant feature data is imported into location **433;** this must include at least the feature polygon **422,** the associated ID **426** of the building's road link, and versioning data **424.**

Once the candidate plot data **403** has been created, at step **502** the first candidate plot record is selected. At step **503** the candidate plot is processed to generate potential plots which are stored in table **404,** and at step **504** a question is asked as to whether there is another candidate plot record in the data. If this question is answered in the affirmative then control is returned step **502** and the next candidate plot is selected. Otherwise, step **313** is completed and all candidate plots have been processed to generate potential plots.

### Figures 6, 7a and 7b

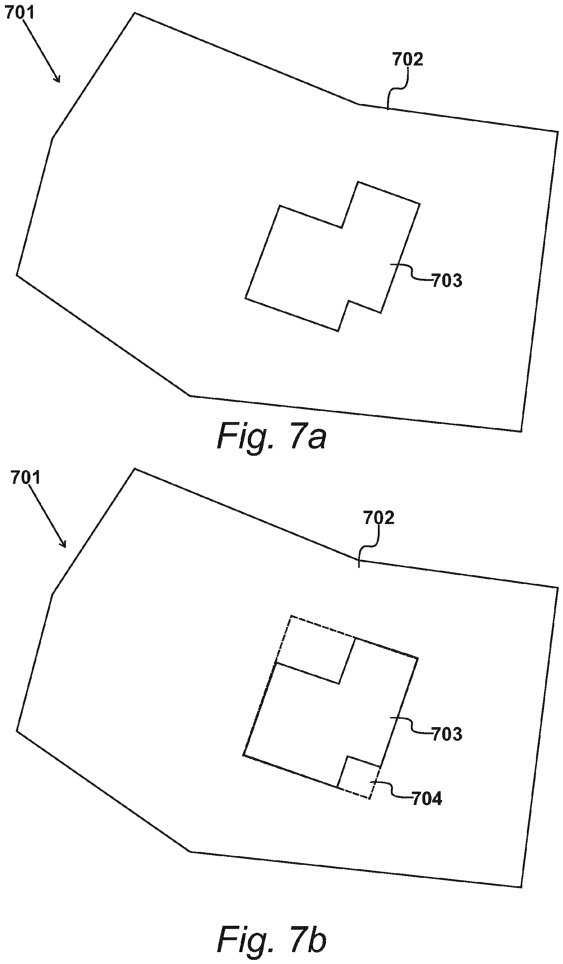

Figure 6 details step **503** at which a candidate plot is processed to generate one or more potential plots, illustrated in Figures 7a and 7b.

Figure 7a illustrates the geospatial data described by a candidate plot. For ease of reference, it will be referred to herein as a candidate plot **701,** but it should be recalled that candidate plot data **403** includes more data than just the geospatial data. Candidate plot **701** includes a land boundary **702,** which is defined by the land polygon **412** stored in land data **432.** As previously described, this polygon is defined by an ordered series of coordinates which can be displayed by drawing straight lines between them. Thus, each corner of land boundary **702** is a coordinate in the land polygon **412.** The polygon is always closed.

Building **703** is similarly defined by feature polygon **422** stored in feature data **433.** since both land boundary **702** and building **703** are stored as geospatial data within the database, geospatial database functions can be carried out upon them. However, in other embodiments, the following steps could be implemented using a programming language or in a mathematical computing environment.

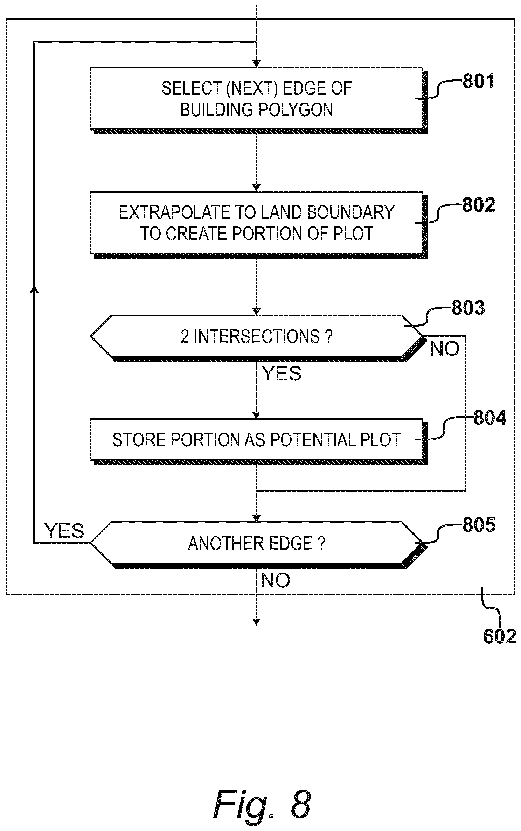

Returning to Figure 6, at step **601** a polygon is created around building **703** and stored as building polygon **434.** In this embodiment, the polygon is a best-fit rectangle, shown as a dashed line at **704** in Figure 7b. Using a rectangle simplifies the operation of data generation. However, in other embodiments other polygon shapes could be used, or the precise outline of the building **703** used instead. Additionally, there may be more than one building on the plot, in which case the building polygon could encompass them both. At step **602** potential plots are generated around the building polygon **704** and stored in potential plot data **404,** as will be detailed further with reference to Figure 8.

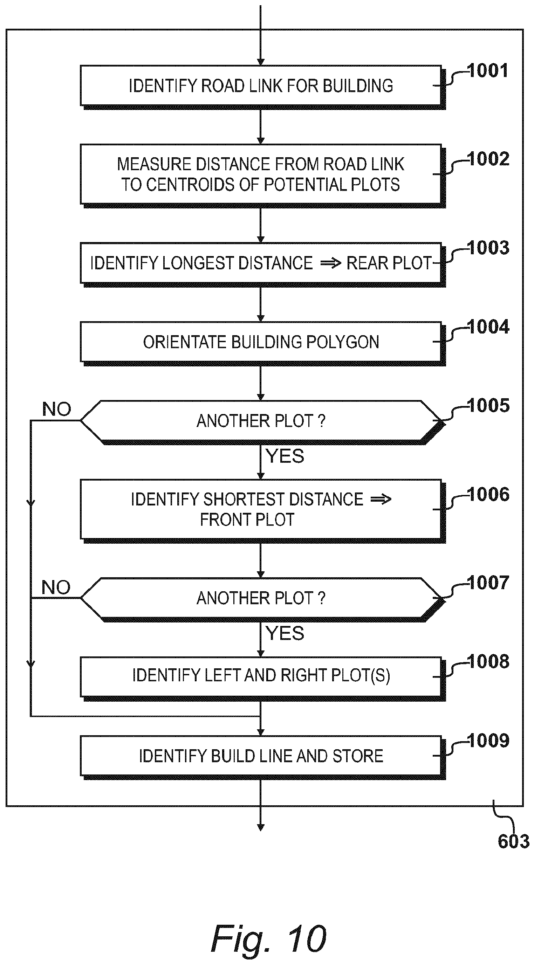

At step **603** the candidate plot is orientated, as will be detailed further with respect to Figure 10. The candidate plot **701** contains no indication of where the front of building **703** is. However, the real-world building it represents does have a front. This must be identified since there are different considerations for front, rear, and side plots.

At step **604** the first potential plot generated at step **602** is selected, and at step **605** it is processed further to identify its usable area and whether it has access to a road. At step **606** a question is asked as to whether there is another potential plot in the candidate plot, and if this question is answered in the affirmative then control is returned to step **604** and the next plot is selected and processed. Otherwise, step **503** is completed.

### Figures 8 and 9

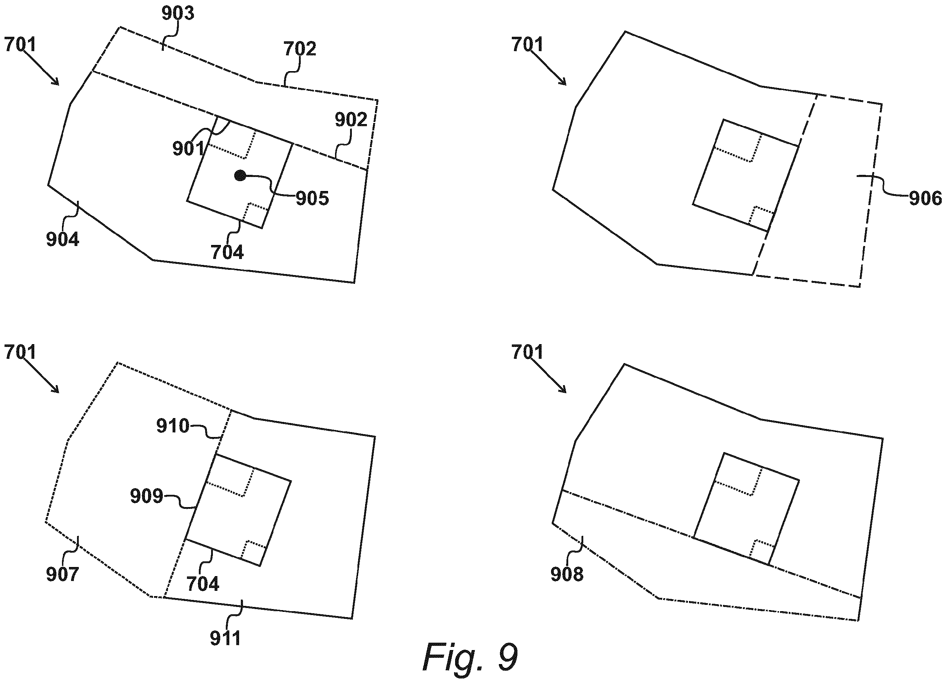

Step **602,** at which potential plots around building polygon **704** are defined, is detailed in Figure 8 and illustrated in Figure 9. At step **801,** the first edge of building polygon **704** is selected. The order in which the edges are considered is not important. At step **802** the edge is extrapolated to land boundary **702** to create a portion of candidate plot **701.** This is shown for all four edges of building polygon **704** in Figure 9. Extrapolating edge **901** to the land boundary **702** produces line **902,** which segments the plot.

At step **803** a question is asked as to whether there are precisely two intersections between the line and the land boundary, and if it is answered in the negative then this line results in an area that cannot be processed further. If the line intersects the boundary in more than two places then this area of the plot has an irregularly shaped boundary. In other embodiments, such areas may be retained for processing.

If the question asked at step **803** is answered in the affirmative, then processing continues. The plot has been segmented into areas **903** and **904** by line **902,** and the area which does not contain the centroid **905** of building polygon **704,** i.e. portion **903,** is added to the table **404** of potential plots at step 804. At this stage, the potential plot ID **441** is generated, the record is linked to the candidate plot at **442,** and the polygon **444** defining area **903** is stored.

At step **805** a question is asked as to whether there is another edge of the building polygon, and if this question is answered in the affirmative then control is returned to step **801** and the next edge is selected. If the question is answered in the negative then all the edges have been considered, and a number of potential plots have been added to table **404.**

In the example shown in Figure 9, candidate plot **701** includes four potential plots, one on each side of building **703:** plots **903, 906, 907,** and **908.** For example, plot **907** has been generated by selecting an edge **909** of building polygon **704,** and extrapolating it to generate a line **910** that intersects with land boundary **702.** Line **910** segments land boundary **702** to create two areas **907** and **911.** Area **907,** which does not contain building polygon **704,** is identified as a portion of the land polygon which is of interest as a potential plot. Its polygon **444** is stored for display.

More than four potential plots cannot be generated in this embodiment. However, fewer than four is likely. For example, a semi-detached house would have three potential plots, at the front, rear and side; a terraced house would have two, at the front and rear; houses with no front garden would not have a front plot. In exceptional circumstances, a building may take up the entire plot and no potential plots are generated.

### Figures 10, 11a and 11b

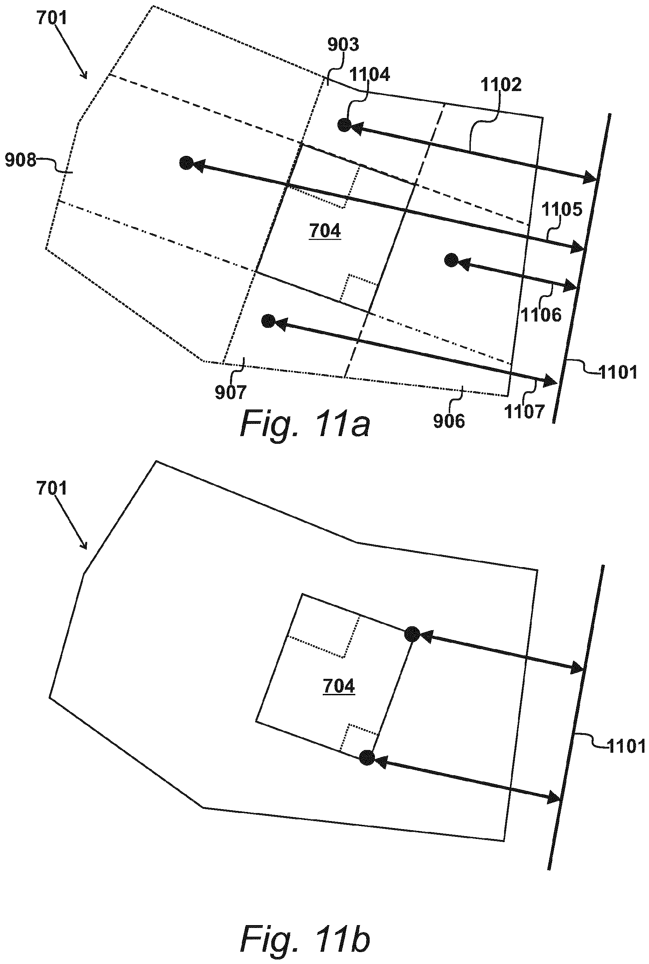

Step **603** at which candidate plot **701** is orientated is detailed in Figure 10 and illustrated in Figures 11a and 11b. As previously explained, it is important to orientate a candidate plot to ascertain which are the front, rear and side plots. Once this has been carried out, the potential plots will be processed further in a different way for each type of plot. In addition, the orientation allows the build line to be identified, which is roughly consistent with the front of building **703;** in general, construction is not permitted in front of the build line in a street scene.

At step **1001** the road link for the building is identified. This is the feature ID of the road that the building stands on, i.e. its postal address, and it is stored as an associated ID **426** in the feature data **433.** Therefore, using the associated ID **426,** the road link can be found in feature data **402** in the imported base data **203.** Its coordinates are stored in feature polygon field **422** but represent a line rather than a polygon, and these are imported into stored in candidate plot data **403** as road link **436,** along with any additional relevant data such as the name of the road.

An assumption is made that the front of the building faces the road. This may not be the case aesthetically, as the "front door" may be on the side of the house, but in terms of identifying the front plot and the build line, the side facing the road is the front.

Therefore, at step **1002** the distance is measured from road link **436** to the centroid of all the potential plots identified at step **602.** This is illustrated in Figure 11a. Line **1101** represents the road link, and the overlapping plots **903, 906, 907** and **908** are shown. Line **1102** shows the distance from line **1101** to the centroid **1104** of plot **903.** Similarly, line **1105** shows the distance to the centroid of plot **908,** line **1106** shows the distance to the centroid of plot **906** and line **1107** shows the distance to the centroid of plot **907.**

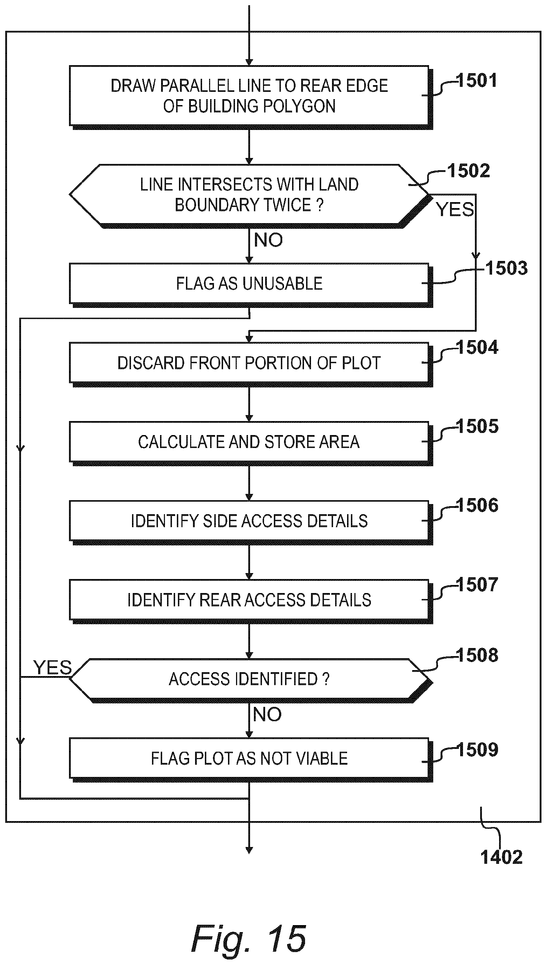

At step **1003,** the plot that has the longest measured distance is identified as the rear plot. Referring to Figure 11a, this is plot **908,** and in this illustration, it can be seen that this is in fact the plot at the rear of building **703.** The plot type **445** for this potential plot is updated with the information that it is a rear plot. At this point, if there is in reality no rear plot then a side plot or even a front plot may be incorrectly identified as a rear plot. However, as will be understood when the processing of a rear plot is discussed with respect to Figure 15, such a plot will be discarded as having no area, and a house with no rear garden is unlikely in any case to be suitable for building.

At this point, building polygon **704** can be orientated: the two corners adjacent to the rear plot must be the rear corners, and therefore the other two corners are the front corners. This information is stored with the building polygon at **434** in candidate plot data **403.**

A question is then asked at step **1005** as to whether there is another potential plot for this candidate plot. If the house has only a back garden, then there is only a rear plot and therefore this question is answered in the negative. However, if the house has a front or side garden, then this question is answered in the affirmative and at step **1006** the plot that has the shortest measured distance is identified as the front plot, and this is stored in the plot type **445.**

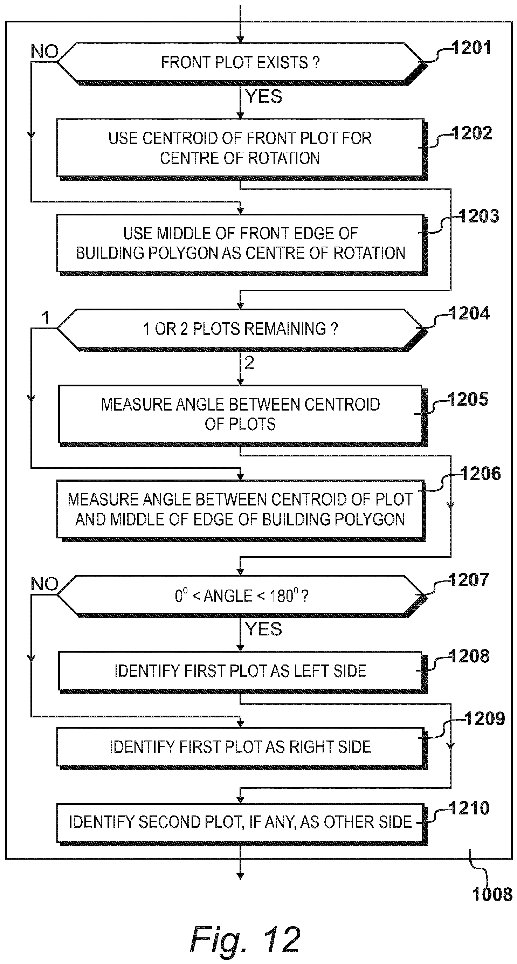

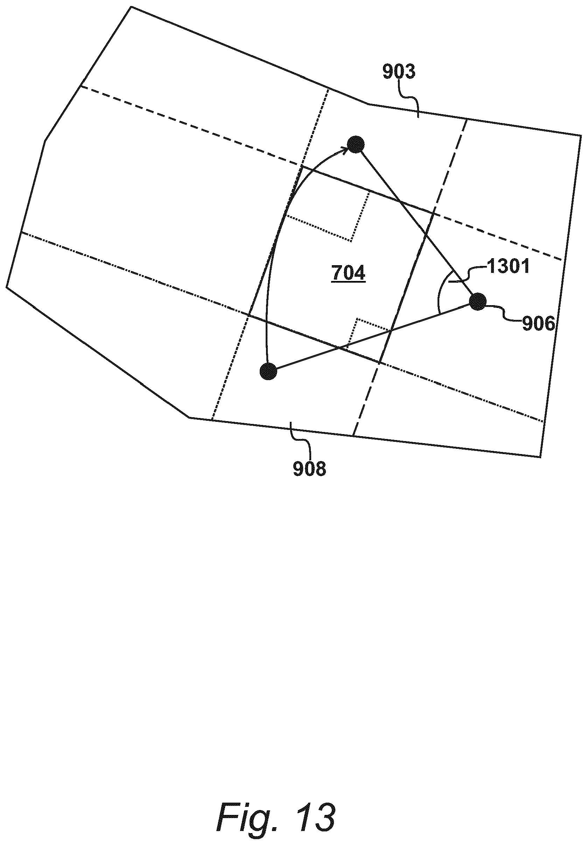

At step **1007** a question is asked as to whether there is another potential plot for this candidate plot. This will be answered in the negative if the house has no side plots, but if it is answered in the affirmative then at step **1008** the remaining plots are identified as left or right, as will be described further with reference to Figure 12 and 13.

At this point, and if either of the questions asked at step **1005** or **1007** is answered in the negative, then the build line is identified at step **1009,** as shown in Figure 11b. The distance from each of the front corners of building polygon **704** to the build line **1101** is measured, and the average of this is stored as build line distance **437.** This distance is not used in the further processing of potential plots, but may be displayed to users along with other data relating to potential plots.

Thus each portion of the candidate plot identified to be of interest as a potential plot is identified as being at the front, back or side of the candidate plot. This is done by obtaining geospatial data, which in this case is road link data **436,** identifying a road associated with the building. The data includes a line, which in this example is line **1101.** The distance between each portion and the line is calculated, and these distances are used to identify the portions as being at the front, back or side of the candidate plot.

### Figures 12 & 13

Step **1008,** at which left and right side plots are identified, is detailed in Figure 12. At step **1201** a question is asked as to whether a front plot has been identified for this candidate plot, and if this question is answered in the affirmative then at step **1202** a centre of rotation is defined to be the centroid of the front plot. Alternatively, if there is no front plot, then at step **1203** the middle of the front edge of the building polygon **704** is defined as the centre of rotation.

At step **1204** a question is asked as to whether there are one or two plots remaining (in this embodiment, there cannot be more than four in total). If there are two, then at step **1205** the angle from the centroid of one plot to the other plot (chosen arbitrarily) is measured clockwise using the previouslyidentified centre of rotation. If there is only one remaining plot, then at step **1206** the angle is measured between its centroid and the middle of the adjacent edge of building polygon **704.**

At step **1207** a question is asked as to whether this measured angle is between 0° and 180°. If this question is answered in the affirmative then at step **1208** the first plot, i.e. the plot measured from, is identified as a left side plot. An illustration of this can be seen in Figure 13. The centroid of front plot **906** is used as the centre of rotation, and the angle between the centroids of plot **908** and plot **903** is measured as shown at **1301.** This is an acute angle meaning that the plot measured from, i.e. plot **908,** is the left side plot. If the angle had been measured from the centroid of plot **903,** then because the measurement is clockwise the angle would have been obtuse. In that case, the question answered at step **1207** is answered in the negative, and at step **1209** the first plot, i.e. the plot measured from, is identified as the right-side plot.

In the case of only a single plot, the same principle holds and the plot is identified either as a left side plot if the angle is acute and has a right-side plot of the angle is obtuse.

At step **1210** the other plot, if there is one, is identified as the opposite side to the one already identified. For example, in Figure 13 plot **903** is identified as the right side since plot **908** has been identified as the left side.

Step **603** is now complete, and the candidate plot has been orientated so that all potential plots are labelled as front, rear, left side or right side.

Thus there is herein described a method in which base geospatial data relating to plots of land and buildings is obtained, which in this example is base data **401** and **402.** Using this base geospatial data, data defining a candidate plot is identified, which in this example is data **403.** This data comprises first geospatial data describing a plot of land, which in this example is polygon **411** defining the land boundary **702,** and second geospatial data describing at least one building standing on it, which in this example is polygon **412** defining building **703.** The building has an unknown real-world orientation, meaning that it is orientated in the real world but this orientation is not present in the geospatial data. A first polygon is created, using the second geospatial data, that encompasses the building, which in this example is building polygon **704.** Using the first geospatial data, a portion polygon that is not in the first polygon is identified, which in this example is polygon **444.** The portion polygon defines a portion of the plot of land, for example one of plots **903, 906, 907** or **908,** and its orientation with respect to the real-world orientation of the building is identified. The portion polygon and data relating to the portion, such as data **403** and **404,** are stored for display, in this example in live database **107.**

### Figure 14

It is now necessary to identify the usable portion of each plot, and determine whether there is access to the plot, as this is essential for a building to be constructed on it.

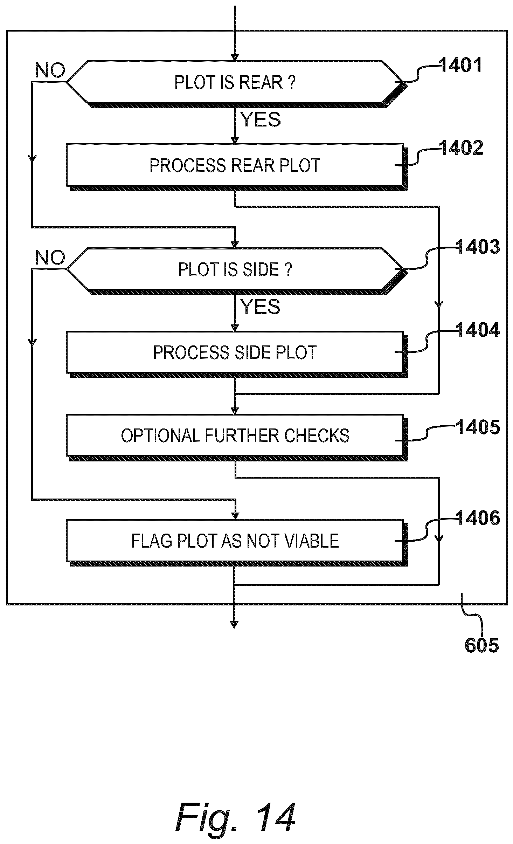

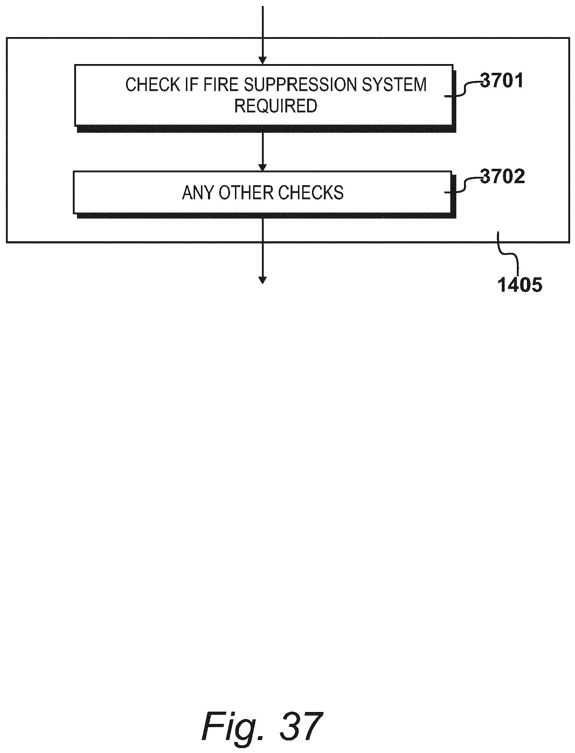

Figure 14 details step **605** at which a potential plot is processed further, to calculate its area and identify access details. At step **1401** a question is asked as to whether the potential plot being considered is a rear plot, as indicated by its plot type **445,** and if this question is answered in the affirmative then it is processed as a rear plot at step **1402.** If it is answered in the negative, then at step **1403** a second question is asked as to whether it is a side plot, and if this question is answered in the affirmative then it is processed as a side plot at step **1404.** Following both steps **1402** and **1404,** optional further checks on the rear or side plot may be carried out at step **1405,** as will be described further with respect to Figure 37.

If the second question is also answered in the negative, then the plot is a front plot, and in this embodiment it is not processed further and at step **1406** is flagged as not viable in plot type **445.** In this embodiment, front plots are not considered viable because it is usually not possible to build in front of the build line. However, the potential plot is not discarded from the database, as it may be useful for other purposes.

The processing of the rear and side plots will now be described with reference to Figures 15 to 22.

### Figures 15 and 16

Figure 15 details step **1402,** at which a potential plot is processed further if it is a rear plot. In general, there exist local planning laws regarding the distance any potential plot must be from the rear of the existing building 703. This distance is stored as a variable within the database, and may be automatically selected depending on the location of the plot, and/or may be modifiable by an administrator of data generation station **105.**

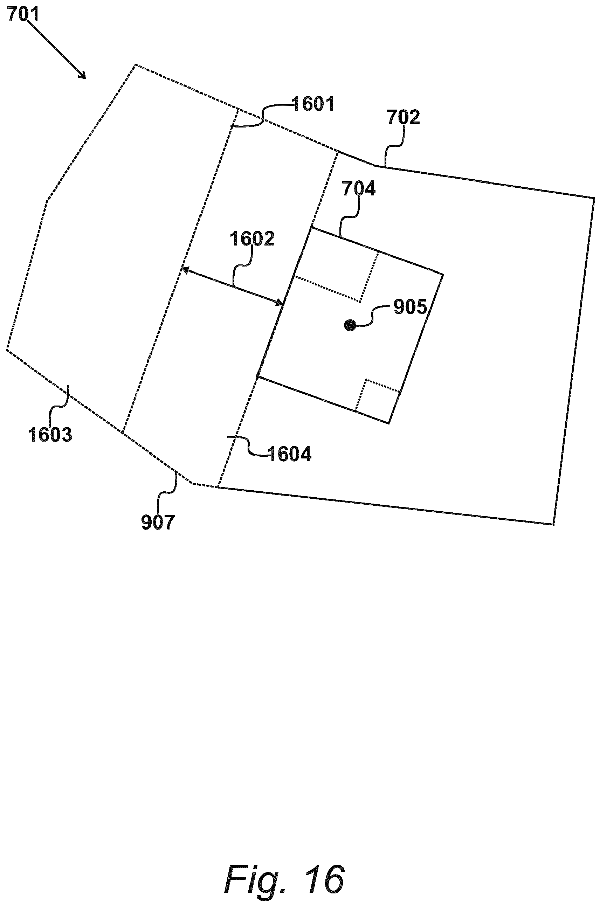

Thus, at step **1501** a line is drawn parallel to the rear edge of the building polygon **704,** at the identified distance away, which in this example is 12.5 metres. This is shown in Figure 16 as line **1601,** which is a distance **1602** away from the rear edge of building polygon **704,** the building polygon having been orientated during the orientation of a candidate plot at step **603.**

At step **1502** a question is asked as to whether this line intersects with the land boundary **702** exactly twice. If this question is answered in the negative then at step **1503** the type **445** of the potential plot is updated with a flag to indicate that it is unusable. If there are no intersections with the land boundary, then there is no portion of the plot that is more than the identified distance away from building polygon **704;** if there are more than two intersections then removing the portion of the plot closest to the building has left two or more areas which cannot be automatically processed. They may however be of interest to another process in the future, and therefore the potential plot is not discarded. It should be noted that flagging a plot as not a potential plot is not the same as flagging it as not viable. A front plot or a plot without access may be marked as not viable, but it may be useful for further processing.

If there are precisely two intersections, then the rear plot can be processed. As shown in Figure 16, line **1601** bisects plot **907** into two portions, rear portion **1603** and front portion **1604.** At step **1504** the front portion of the plot is discarded. This is done by measuring the distances from the centroids of the two portions to the centroid **905** of building polygon **704.** The portion with the longer measurement must be the rear plot, and the coordinates of this portion are stored as polygon **444** for the potential plot, overwriting the previously-stored polygon. At step **1505** the area of the potential plot is calculated from the polygon **444** and stored at **443.**

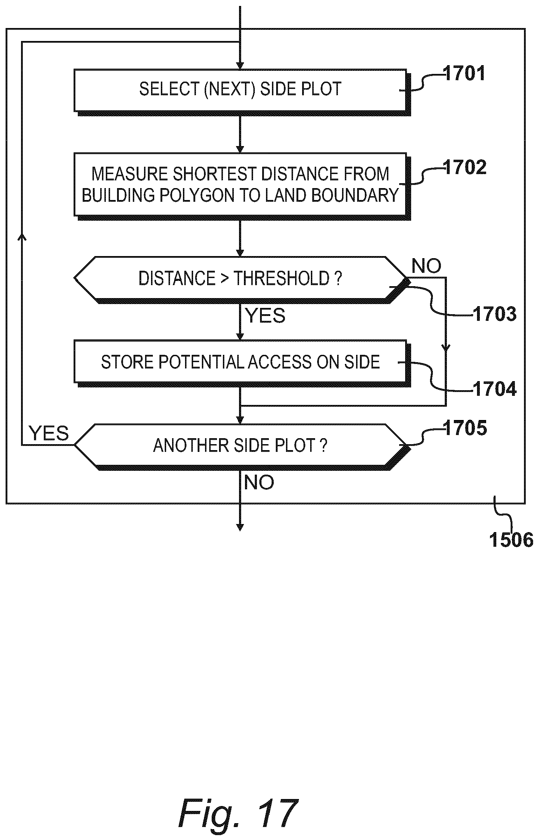

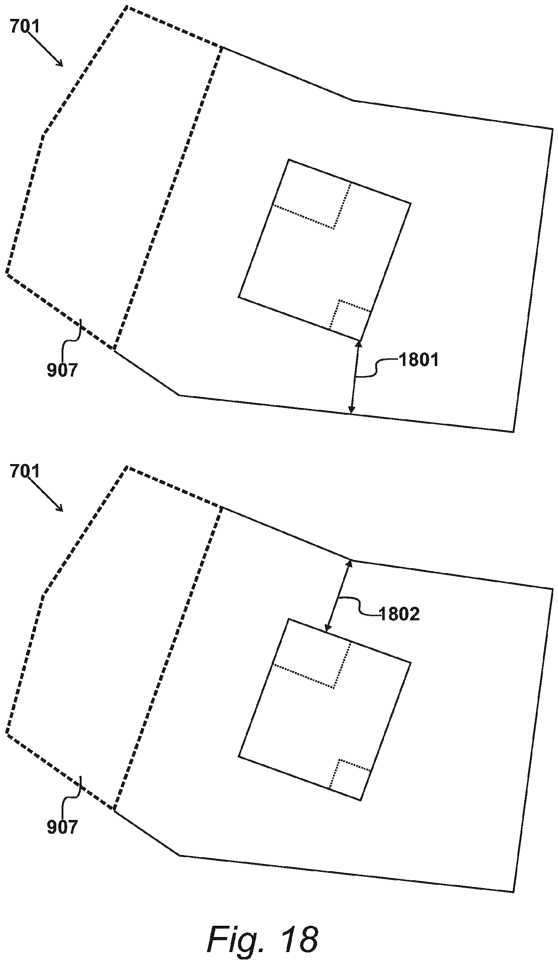

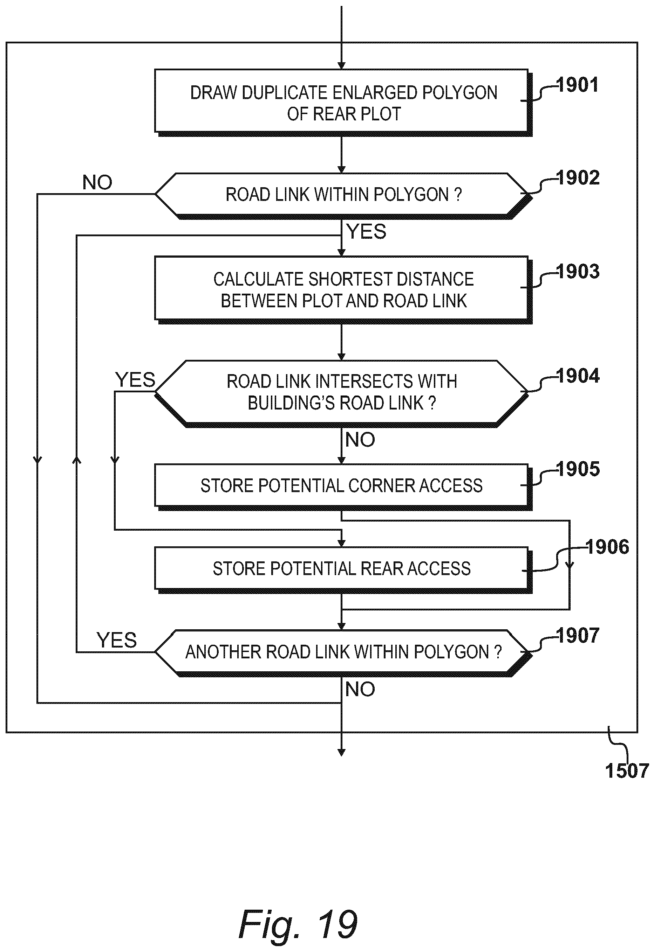

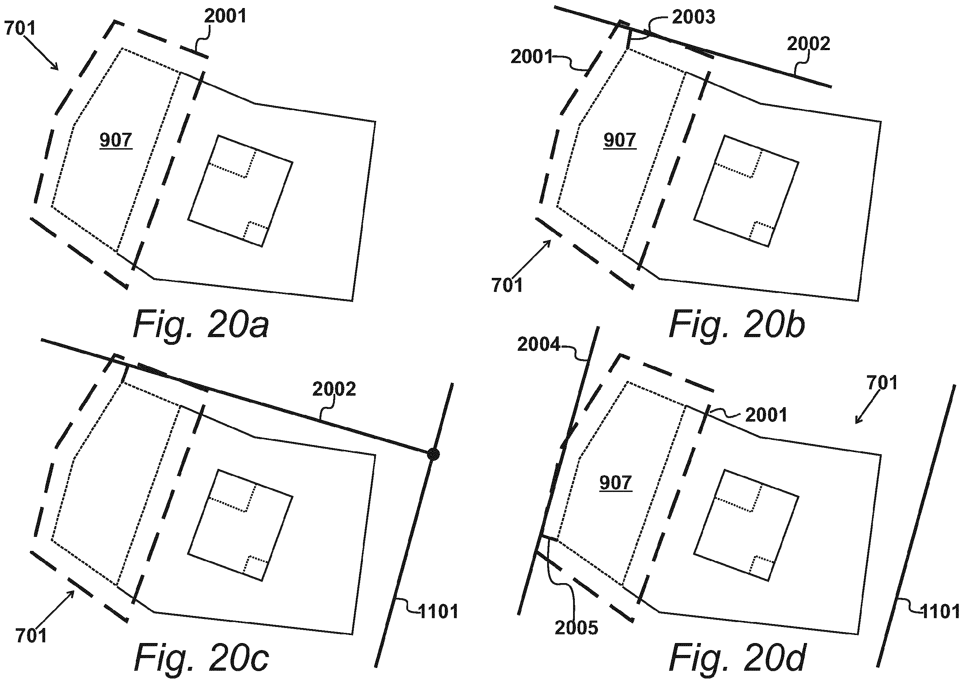

For this rear plot to be viable, it must have vehicular access to a road, either down the side of the building or at the rear. Therefore, at step **1506** side access details are identified, as will be described further with reference to Figures 17 and 18, and at step **1507** rear access details identified, as will be detailed further with respect to Figures 19 and 20. At step **1508** a question is asked as to whether any access details, whether side or rear, have been identified, and if this question answered in the negative then at step **1509** the plot is flagged as not viable. This means that it will not be displayed to users as a plot that may be built on. However, it may be combined with adjacent potential plots to create an assembled plot that does have access, and therefore it is saved for further processing.

At this stage, or following step **1503,** or if the question asked at step **1508** is answered in the affirmative, then step **1402** is completed. The rear plot has been processed and either flagged as a viable plot with access, flagged as a non-viable plot that may be suitable for further processing, or flagged as unusable. These flags are all stored in type location **445,** which may be a number of fields or links to other tables.

Thus a portion polygon defining a portion of a plot of land, identified as a potential plot, may be reduced in size. In this example, the polygon **444** relating to rear plot **907** is reduced by generating a second line, which in this example is line **1601,** that is parallel to and at a first pre-determined distance from an edge of the building polygon, and that intersects with the second polygon defining the land boundary. This line segments the portion polygon to create at least two areas, and the area closest to the edge is discarded from the polygon.

### Figures 17 and 18

Step **1506,** at which side access details for a rear plot are identified, is detailed in Figure 17 and illustrated in Figure 18. If there is side access, it must be through a side plot, and therefore at step **1701** the first side potential plot belonging to the candidate plot is identified. If there are no side plots, then step **1506** is over and there is no side access.

At step **1702** the shortest distance from the building polygon **704** to the land boundary adjacent to the side plot is measured. This is illustrated in Figure 18 for both side plots in the example; rear plot **907** is shown with its redefined polygon. If the left plot **908** is considered first, then the shortest distance is shown by line **1801.**

At step **1703** a question is asked whether this measured distance **1801** is greater than a threshold. The minimum distance between a building and its land boundary for vehicular access is set by local planning laws, and is stored in the database. Different values for different planning authorities may be stored, and the appropriate value may be automatically selected and/or changed by an administrator of data generation station **105.** In this example, the threshold is 3.2 metres.

Thus, if the shortest measured distance between the building and the land boundary is greater than this threshold, then at step **1704** access details are added to location **446** for this potential plot, indicating that there is access on the left or right side, according to the side plot being considered.

At step **1705** a question is asked as to whether there was another potential side plot in the candidate plot, and if this question is answered in the affirmative then control is returned step **1701** and the next side plot is selected. In Figure 18, the right side plot is identified and the distance **1802** measured. Alternatively, step **1506** is complete and either side access details have been identified, or they have not.

This process determines whether there is access from a rear plot through a side plot to the front plot. It is assumed that if there is access to the front plot, then there is access to the road.

### Figures 19, 20a, 20b, 20c and 20d

The process now turns to consideration of access at the rear, and step **1507** is further detailed in Figure 19 and illustrated in Figures 20a to 20d. Identifying potential rear access points involves determining whether there are any roads adjacent to the rear potential plot.

At step **1901** the polygon **444** of the rear potential plot **907** is duplicated and enlarged. In this example, the enlargement is by 5 metres in all directions; this is a user-configurable variable, and may be altered depending on the typical width of local pavements and roads. Referring to Figure 20a, the polygon defining plot **907** has been duplicated and enlarged as polygon **2001.**

At step **1902** a question is asked as to whether there exists a road link that intersects with polygon **2001.** This involves searching feature data 4O2 for features identified as roads whose defining line, stored at polygon **422,** intersects with polygon **2001.** If this question is answered in the affirmative, then this road is adjacent to plot **907,** and therefore at step **1903** the shortest distance between the rear potential plot and this road link is calculated. As shown in Figure 20b, a road link **2002** has been found that intersects with polygon **2001;** the shortest distance between the polygon defining plot **907** and road link **2002** is shown as line **2003.** The plot therefore has rear access to a road. It now needs to be determined what type of rear access this is.

At step **1904** a question is asked as to whether this road link intersects with the building's road link, stored at **436** in the candidate plot **403.** As illustrated in Figure 20c, road link **2002** intersects with building road link **1101** meaning that the plot is on a corner. If this question is answered in the affirmative then at step **1905** the access details, including the road link **2002** and the coordinates of shortest distance **2003,** are stored as potential corner access details in access data **464** for this potential plot.

Conversely, if the road link does not intersect with the building's road link, then at step **1906** similar details are stored but marked as potential rear access. This is illustrated in Figure 20d, where road link **2004,** which intersects with enlarged polygon **2001,** does not intersect with building road link **1101.** Road link **2004** and the shortest distance **2005** between plot **907** and road link **2004** are therefore stored in access data **446** as potential rear access.

At step **1907** a question is asked as to whether there is another road link within the polygon. In the example shown in the Figures, this question would be answered in the affirmative and control returned to step **1903** to consider this new road link. Alternatively, step **1507** is completed.

Thus, at the conclusion of steps **1506** and **1507,** a maximum of two options for side access may have been identified, and any number of options for rear access. Alternatively, it is possible that no access has been identified, in which case the plot is not viable.

This completes the processing of a potential rear plot. Consideration returns to any identified side plots.

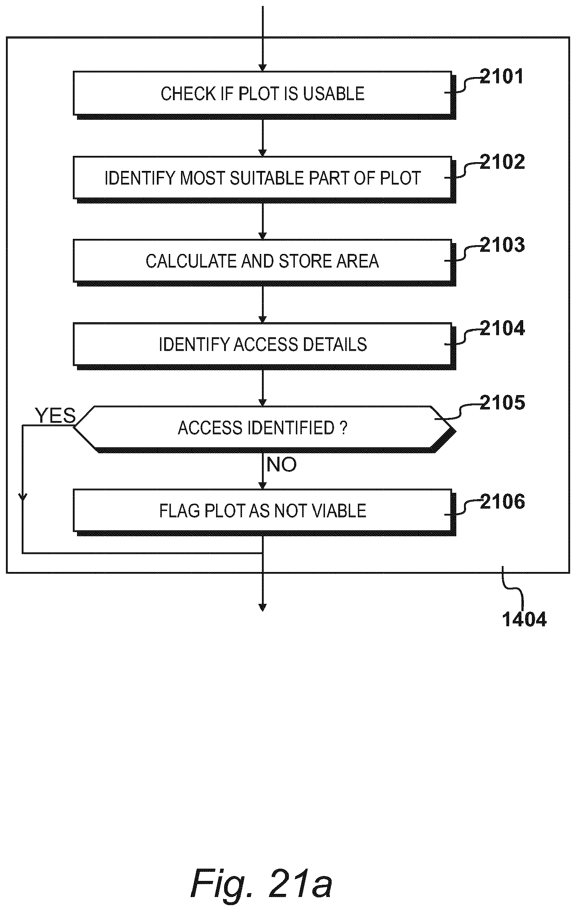

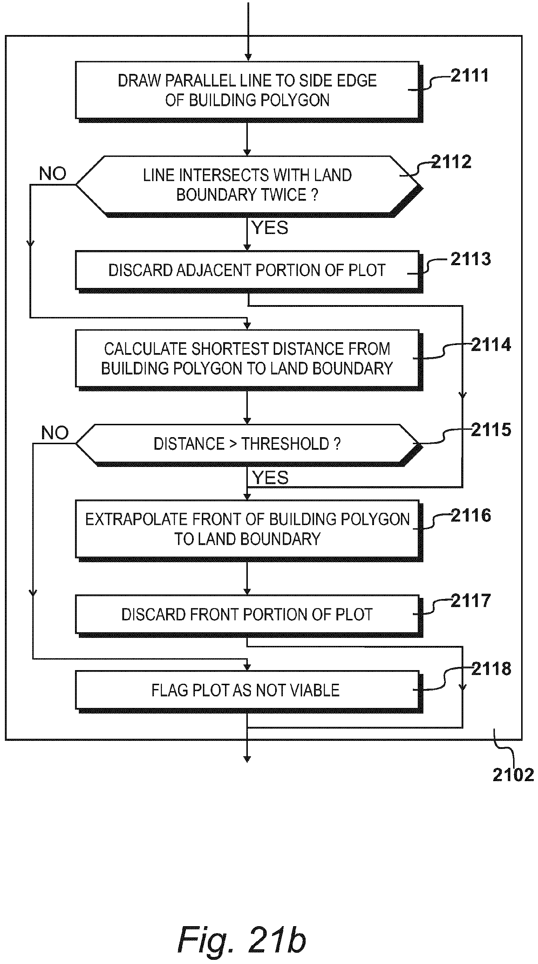

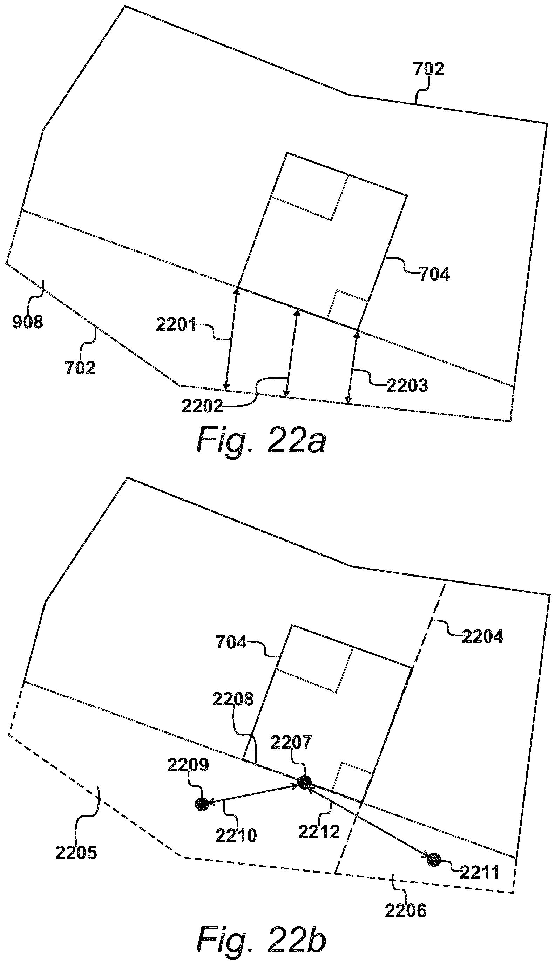

Figure 21aStep 1404 at which a side plot is processed is detailed in Figure 21a, further detailed in Figure 21b, and illustrated in Figures 22a and 22b. For a side plot, it is necessary to identify whether the plot is wide enough to accommodate a building. It is assumed that there is potential access at the front of the building. Other considerations include whether the plot is on a bend or a corner of the road.

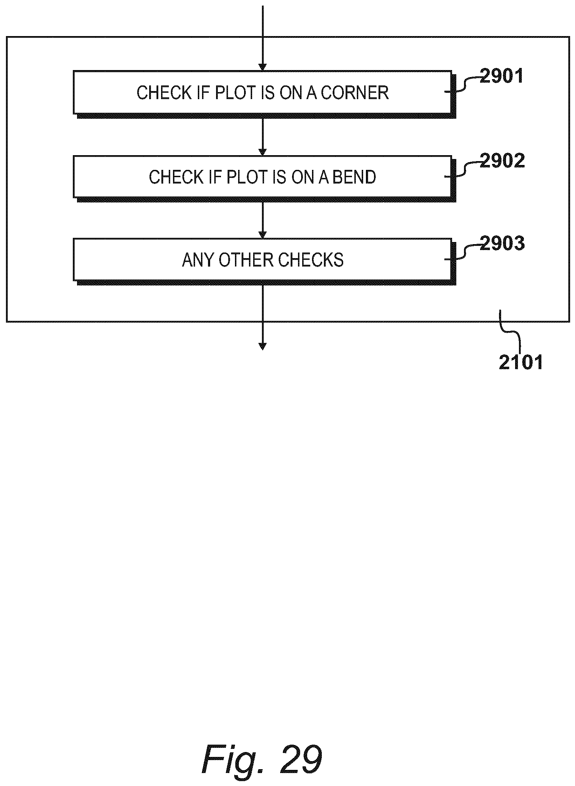

At step **2101,** initial checks are carried out as to whether the plot is usable. This will be further described with reference to Figures 29 to 34b. If the plot is flagged as unusable during this step, then step **1404** will be complete for this plot.

If the plot was not flagged as unusable, then at step **2102** the most suitable part of the plot to be used is identified, as will be further described with reference to Figure 21b. This may be the whole plot, or part of it may be discarded before continuing. At step **2103** the area of the plot is calculated and stored in field **443.**

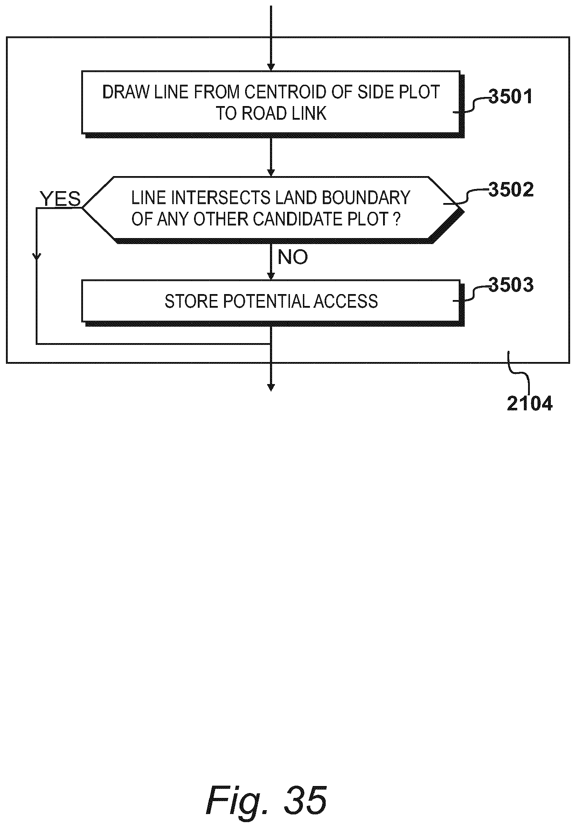

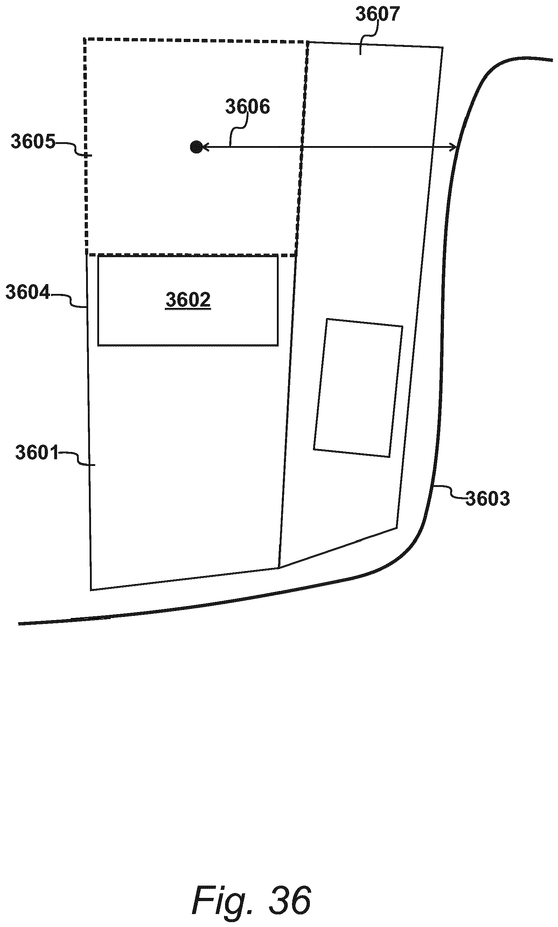

For this side plot to be viable, it must have vehicular access to a road. Many side plots have direct access to the road in front of the house, but this is not always the case. Therefore, at step **2104** access details are identified, as will be described further with reference to Figures 35 and 36, and at step **2105** a question is asked as to whether any access details have been identified. If this question answered in the negative then at step **2106** the plot is flagged as not viable. This means that it will not be displayed to users as a plot that may be built on. However, it may be combined with adjacent potential plots to create an assembled plot that does have access, and therefore it is saved for further processing.

At this stage, and if the question asked at step **2105** is answered in the affirmative, then step **1402** is completed.

### Figures 21b, 22a and 22b

Step **2102,** at which the most suitable part of the plot is identified, is detailed in Figure 21b and illustrated in Figures 22a and 22b. The side plot is processed differently depending on its size. For a wide side plot, it would be most appropriate to build away from the building, but for a narrow side plot it would be necessary to build closer.

First, at step **2111,** a line is drawn parallel to the adjacent side edge of the building polygon **704,** at a specified distance away, which in this example is 12.5 metres and is user-configurable. At step **2112** a question is asked as to whether this line intersects with the land boundary **702** exactly twice. If this question is answered in the affirmative then the plot is wide enough to be bisected by the line into two portions. In this case, the portion of the plot closer to the building is discarded, by measuring the distances from the centroids of the two portions to the centroid **905** of building polygon **704,** selecting the portion with the longer measurement, and storing the coordinates of this portion as polygon **444** for the potential plot, overwriting the previously-stored polygon.

Alternatively, if the line drawn at step **2111** intersects more than twice with the land boundary or not at all, then the line does not bisect the side plot, meaning that the plot is narrow. It is therefore necessary to check whether it is wide enough to build on.

At step **2114,** the shortest distance from building polygon **704** to the land boundary **702** is identified for the side plot under consideration. As shown in Figure 22a, side plot **908** is being considered. The shortest distance is discovered by taking three measurements from the edge of the building polygon **704,** one at each end of the edge and one in the middle, as shown by arrows **2201, 2202** and **2203.** The shortest of these distances is identified, which in this example would be distance **2203,** and at step **2115** a question is asked as to whether this distance is greater than a threshold. As with the other thresholds used in this process, this may vary according to local planning laws, and is stored in the database (not shown). The relevant threshold may be automatically identified based on the location of the candidate plot, and/or may be configurable by an administrator. In this example, the threshold is 7.5 metres. This is the minimum width of a side plot in order for it to be viable.

Thus, if this question is answered in the affirmative, and following step **2113,** then at step **2116** the front edge of building polygon **704** is extrapolated to the land boundary **702.** This is shown in Figure 22b as line **2204,** which bisects plot **908** into portions **2205** and **2206.**

At step **2117** the front portion is discarded, as it is not usually possible to build in the front garden of a residential building. This is done by measuring the distances from the centroids of each portion to the middle of the edge of building polygon **704** adjacent to the side plot. Thus, in the example shown in Figure 22b, the distance is measured from the midpoint **2207** of the edge **2208** of building polygon **704** to the centroid **2209** of portion **2205,** as shown by line **2210.** A similar measurement is made to the centroid **2211** of portion **2206,** as shown by line **2212.** The shortest measurement is **2210,** indicating that portion **2205** is the rear portion. Thus, the coordinates of rear portion **2205** are saved as polygon **444** for this potential plot, overwriting the previous coordinates of plot **908.** Plot **908** is therefore redefined using the polygon of portion **2205.**

If the question asked at step **2115** is answered in the negative, to the effect that the shortest distance between the building polygon and the land boundary is less than the relevant threshold, then at step **2118** the plot is flagged as not viable because it is too narrow for construction. Following either step **2117** or step **2118,** step **2102** is complete.

Control then passes to step **2103** and the area of the plot is calculated. At this stage, it may be necessary to refine the side plot slightly. For example, if the plot was redefined at step **2113** because it is wide, but the eventual calculated area is small, then it might be a candidate for re-evaluation as a narrow plot.

At he completion of step **1404,** the side plot has been processed and either flagged as a viable plot with access, flagged as a non-viable plot that may be suitable for further processing, or flagged as unusable.

At the completion of step **502** detailed in Figure 6 and further described in subsequent Figures, a candidate plot has been processed to identify all potential plots within it, and they have been identified as viable or not. In other embodiments, the process could stop here, with the new and updated potential plots being collated and pushed to one or more live databases. However, in this embodiment plots are further processed in order to identify potential assembled plots at step **503,** as will be subsequently described.

### Figures 23, 24a and 24b

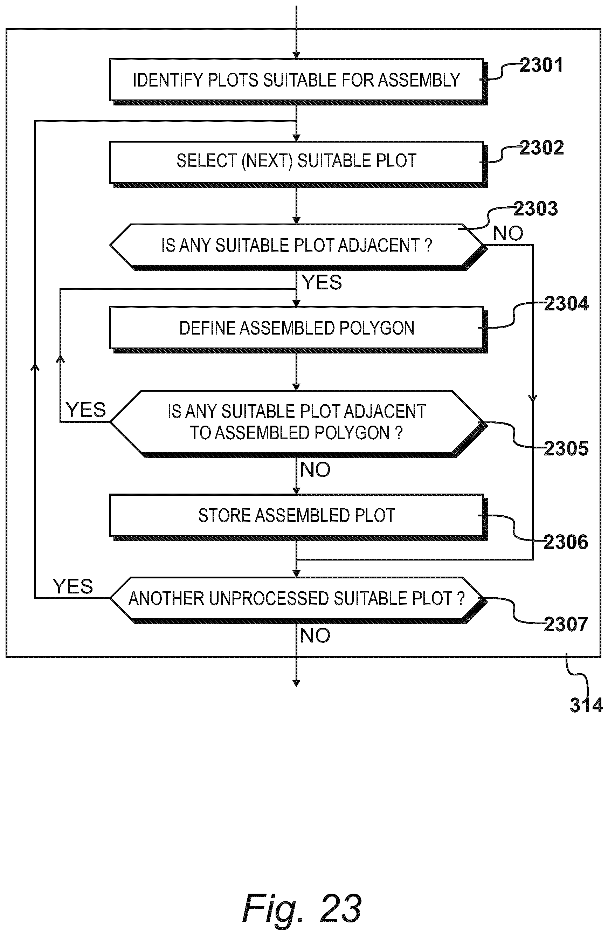

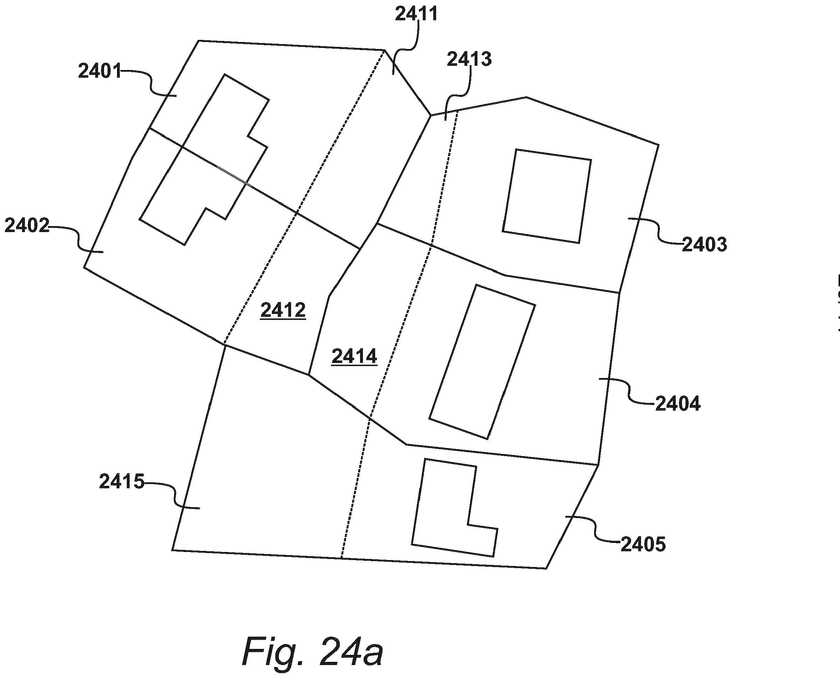

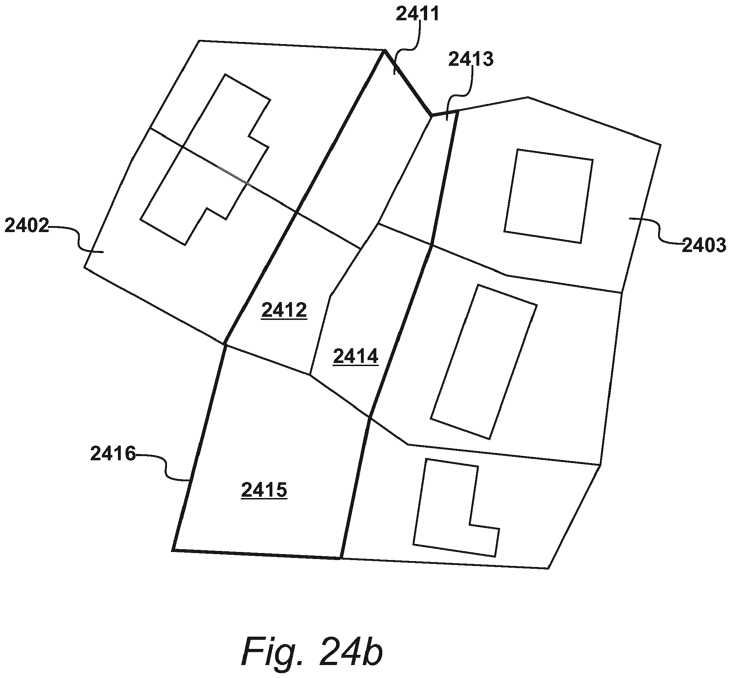

Once all potential plots have been generated at step **313,** process **205** determines whether any of these can be assembled to create larger plots, referred to as assembled plots. This is carried out at step **314,** detailed in Figure 23, and illustrated in Figures 24a and 24b.

Figure 24a shows five candidate plots with their land boundaries shown in solid lines: candidate plots **2401, 2402, 2403, 2404** and **2405.** Each of these has been processed during step **313,** and a number of potential rear plots have been identified, shown with dashed lines. Potential plot **2411** is at the rear of plot **2401,** potential plot **2412** is at the rear of plot **2402,** potential plot **2413** is at the rear of plot **2403,** potential plot **2414** is at the rear of plot **2404,** and potential plot **2415** is at the rear of plot **2405.**

In this example, potential plots **2411, 2414** and **2415** do not have any access and are therefore not viable. Plots **2412** and **2413** do have potential side access, but might be considered too small to build on. However, when viewed as a single large plot made up of potential plots **2411** to **2415,** there is a considerable usable area that does have access. Process **105** therefore automatically identifies such assembled plots.

At step **2301,** plots suitable for assembly are identified. In this embodiment, this includes all side and rear plots, whether or not they are flagged as viable and whether or not they have access. Plots marked as unusable are not included, nor are front plots. However, in other embodiments such plots could be included.

At step **2302** the first of these identified suitable plots is selected, and at step **2303** a question is asked as to whether any other suitable plot is adjacent to it. This is done by querying the set of suitable plots to find those with adjacent polygons **444.**

If an adjacent plot is found, then at step **2404** an assembled polygon is defined by merging the two adjacent polygons. At step **2505** a question is asked as to whether there is any further suitable plot in the identified list that is adjacent to this assembled polygon; this is done in the same way as at step **2303.** If the question is answered in the affirmative then control is returned to step **2404** and the assembled polygon is redefined by merging it with this adjacent polygon.

Eventually, the question asked at step **2505** will be answered in the negative, to the effect that there is no further suitable plot that has a polygon adjacent to the assembled polygon, and therefore at step **2606** the assembled plot is stored. Referring back to Figure 4b, assembled plot data **405** includes an assembled plot ID, links to the potential plots it encompasses **452,** the area of the assembled plot **453,** and its polygon **454** (as defined at step **2404).** Access data **455** is copied from the access data for the encompassed potential plots.

At this stage, and if the question asked at step **2303** is answered in the affirmative, then a question is asked as to whether there is another suitable plot that has not yet been considered in this process, and if this question is answered in the affirmative then control is returned to step **2303** and the next suitable plot is selected. Alternatively, all the suitable plots have been considered and all possible assembled plots have been generated, and step **314** is concluded.

The assembled plot generated in this example is shown in Figure 24b at **2416,** and it is an assembly of potential plots **2411** to **2415.** Thus, in the record in assembled plot data **405,** the IDs of these potential plots are stored at **452.** Coordinates defining polygon **2416** are stored at **454,** and its area is stored at **453.** Access is potentially available down the sides of plots **2402** or **2403,** and these details are stored in access data **455.**

It may be the case that none of the potential plots making up the assembled plot have any access. However, this does not mean that the assembled plot is not viable, as it might be possible to purchase the entirety of a plot and knock down the building standing on it for the purposes of access. Therefore, all assembled plots are shown to users, even those without any access.

At the conclusion of step **314,** data generation process has concluded an iteration of generating working data **206,** and waits for another update. Data collation process **205** receives an update notification at step **321,** and starts an iteration of updating the live databases.

Thus, if the method is carried out for each of a number of candidate plots, a large number of potential plots are generated, each defined by a portion polygon such as polygon **444.** A set of portion polygons that are substantially adjacent to each other define a continuous real-world area, and can be used to generate an assembled polygon, such as polygon **454.** This assembled polygon and associated data, such as data **405,** are stored, for example in live database **107,** for display.

### Figure 25

Once data generation process **105** has completed the generation of potential plots and assembled plots in working database **206,** data collation process **205** identifies changes to previously-generated data and pushes these changes to live database **207,** and any other live databases such as that on server **107.**

Live database **207** and user database **208** are illustrated schematically in Figure 25. Live database **207** includes two tables, potential plot data **2501** and assembled plot data **2503.** These are collations of data from working database **206.** Working database **206** contains data that will not be shown to the end user, and therefore this can be omitted from the live database; in addition, live database **207** contains some data that is useful for display to a user but is not necessary for the data generation process. In addition, working database **206** is normalised and indexed to optimise the data generation process, whereas live database **207** is optimised for user queries. The two databases may even be in different formats.

Potential plot data **2501** includes a potential plot ID **2511,** area **2515,** polygon **2516,** plot type **2517,** and access data **2518,** all of which are imported from locations in potential plot data **404** in working database **206.** In addition, for each record, relevant data from candidate plot data **403** is imported: candidate plot ID **2512,** land data **2513,** feature data to **2514,** road link **2519,** and build line distance **2520.** These are imported into each potential plot entry rather than stored in a linked table, to assist with versioning which will be described further below. In addition, potential plot data **2501** contains new data inserted by data collation process **105:** global coordinates **2521,** attributes **2522** and versioning data **2523,** all of which will be described further below.

Assembled plot data **2503** contains data imported from assembled plot data **404** in working database **206,** and includes assembled plot ID **2531,** potential plot IDs **2532,** area **2533,** polygon **2534** and access data **2535,** which are a copy of fields **451** to **455** in table **405.** In addition, there is versioning data **2536.** Potential plots **2532** link to potential plot ID **2511** in table **2501.**

Therefore, live database **207** contains all the information necessary for users to search for assembled plots, view details of plots, including diagrams of the plot area and indications of access, and save plots in their user profile to access again at a later time. Thus, user database **208** includes a user data table **2504,** which at its most basic level includes user details **2541** and saved plots **2542.** User details **2541** includes all the details necessary for the user, including for example logon details, subscription details, and so on. Saved plots **2542** is a list of all potential plots and assembled plots in which the user is interested, and therefore links to potential plot ID **2511** and assembled plot ID **2531.**

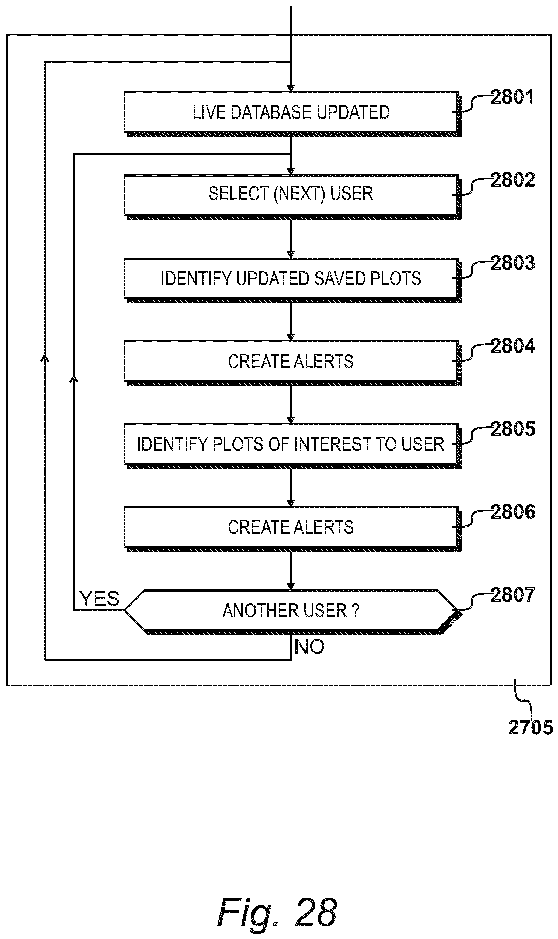

Because of the capability for users to save plots, it is important that when live database **207** is updated continuity is maintained. In other embodiments data collation process **205** could simply overwrite all the records in live database **207.** However, this would lead to an unsatisfactory experience for users who would find that their saved plots might be changed or deleted without warning. Thus, in this embodiment, data collation process **105** pushes changes to live database **207** and updates versioning data **2523** and **2536,** in order to ensure a seamless experience for users. The versioning data can be used to indicate to users that a plot they are interested in has changed, as will be described further with reference to Figure 28.

### Figure 26

Update process **322** is detailed in Figure 26. At step **2601** the process compares working database **206** with live database **207** to identify matching potential or assembled plots, using the candidate plot ID which is always the same on every re-generation of the working data. At step **2602** the first matching plot is selected and at step **2603** a question is asked as to whether the land data or feature data has changed. Such a change can be identified by comparing version numbers, which are stored in land data **432** and feature data **433** in the working database, and also in land data **2513** and feature data **2514** in the live database.

If this question is answered in the affirmative, to the effect that the land data or feature data was updated, then it is possible that the potential plots and subsequent assembled plots have also been updated, and therefore at step **2604** the plot in the live database is updated. This can be done by copying the current data into versioning data **2523** or **2536,** creating a new record for the new data and using the versioning data to indicate which is the current version, and so on. There are many ways of storing versioning information, and any suitable method can be used. At step **2604** a question is asked as to whether there is another matching plot, and if this question is answered in the affirmative, or if the question asked at step **2603** is answered in the negative, then control is returned to step **2602** and the next matching plot is selected. Alternatively, the question is answered in the negative and all the matching potential and assembled plots have been compared and updated if necessary.

At step **2606** plots in working database that are unmatched in the live database are identified. These are new plots, and therefore at step **2607** they are imported into the live database. Along with data from working database **206,** the process includes importing further data: global coordinates **2521** and attributes **2522.**

Global coordinates **2521** are the longitude and latitude of the potential plot, obtained by converting polygon **2516** into a global system. This enables each potential and assembled plot to be shown on a map.

Attributes **2522** includes other data which may be useful, which may be derived from land data **401** or feature data 4O2, or may be derived from other locations **110.** Examples of such attributes are whether the plot is in an area of special scientific interest, nature reserve or national park, its flood risk, the last resale value of the candidate plot, the building's listed status, previous uses of the land such as landfill, and so on. Further attributes may be calculated from data already in the potential plot data, such as the size of house or number of houses that could be built on the available area. Such data could be generated on the fly when serving user requests, but it may be more efficient to calculate it at this stage. Alternatively, such data could be calculated on the fly and then cached in live database **207** by server process **209.**

At step **2608** plots in the live database that are unmatched in the working database are identified. These are plots that no longer exist, usually because the candidate plot has been altered. Thus, at step **2609** the versioning data for these plots in the live database is updated to indicate that these plots are deleted.

Step **322** is now complete. Data collation process **205** next pushes these changes out to any other live databases, such as that on server **107,** at step **323.**

The updating process described with respect to Figure 26 is only one suitable method. Comparison and update of databases can be done in many ways, and the most efficient way may depend upon the type of database used and the capability of the processor. For example, it may be more efficient to discover all the changes and then push them to all databases, to compare candidate plots rather than potential plots, and so on. In addition, as has been previously described, in other embodiments data generation process may only consider candidate plots that have updated land data or feature data, in which case it would be assumed that all records in working data **206** need pushing to the live databases.

### Figure 27

It has been described how data generation process **105** imports base data, generates working data, and updates the live databases with any changes. Server process **209** will now be briefly described, which is run by a processor on server **106.**

Depending on the amount of data and number of users, it may be appropriate for server **106** to be a network of servers, possibly including a load manager and dedicated servers for different functions, and so on. It could run processes on one or more processors or on a distributed processing system. References to a processor therefore include any suitable architecture. Figure 27 shows a highly simplified schematic which could be embodied in any server architecture, showing a number of processes which form part of server process **209.**

Session maintenance process **2701** handles user logins, opens and maintains sessions, and handles session timeouts.

User details maintenance process **2702** updates user details **2541** as necessary, either in response to user requests or in response to internal requests such as a subscription being updated or expiring.

Request handler **2703** receives requests from users for data from live database **207,** and serves data in reply.

Database maintenance process **2704** handles any necessary updates to live database **207** and saved plots **2542.** For example, it ensures that the database is appropriately indexed, handles any caching required, flags corrupted data, and so on.

Finally, user notifications process **2705,** which will be described further with respect to Figure 28, notifies users of changes to their saved plots and recommends plots of interest.

### Figure 28

Figure 28 details user notification process **2705.** It is initiated by receiving a notification that live database **207** has been updated by data collation process **205.**

At step **2802** an active user is selected from user details **2541,** and at step **2803** the process identifies whether any of the user's saved plots **2542** have been updated, as indicated by comparing versioning data **2523** or **2536** with versioning data in saved plots **2542.** If there have been any updates, for example a plot has been changed or no longer exists, then the process creates one or more alerts at step **2804.** An alert may be internal, so that the user is notified of the change on next logon or via an internal message, it may be a message sent by an external communication method such as email, text message, and so on, it may be a push notification to a user's device, or any other suitable form of notification.

At step **2805** new and updated plots that may be of interest to the user are identified and similar alerts are created at step **2806.** This identification may be done in a number of ways. For example, the user may have saved search filters, there may be notification subscription options where a user selects certain criteria which are of interest, or alternatively the process may automatically identify potential plots for recommendation based on the user's search history and saved plots.

At step **2807** a question is asked as to whether there is another active user, and if this question is answered in the affirmative then control is returned to step **2802** and the next user is selected. Alternatively, all the users have been considered, and the process returns to step **2801** to wait for another update to live database **207.**

### Figure 29

Optional refinements of the above-described process are described with reference to Figures 29 to 39. In the real world, roads are often not straight and houses do not always line up neatly to create usable side and rear plots.

Figure 29 details step **2101,** at which optional checks are carried out on side plots to remove those which are not usable. If a candidate plot is situated at the corner of two roads, then a side plot will be adjacent to a road, and should therefore be treated as a front plot and flagged as not usable. In addition, the other side plot in the candidate plot is unlikely to be usable, because it will constitute a significant part of the building's garden. This is checked at step **2901.**

Similarly, if a candidate plot is situated at a bend in a road or at the end of a hammerhead, then the side plot should also be treated as a front plot and flagged as unusable. This is checked at step **2902.**

At step **2903** any other checks, not detailed herein, are carried out.

### Figures 30 and 31

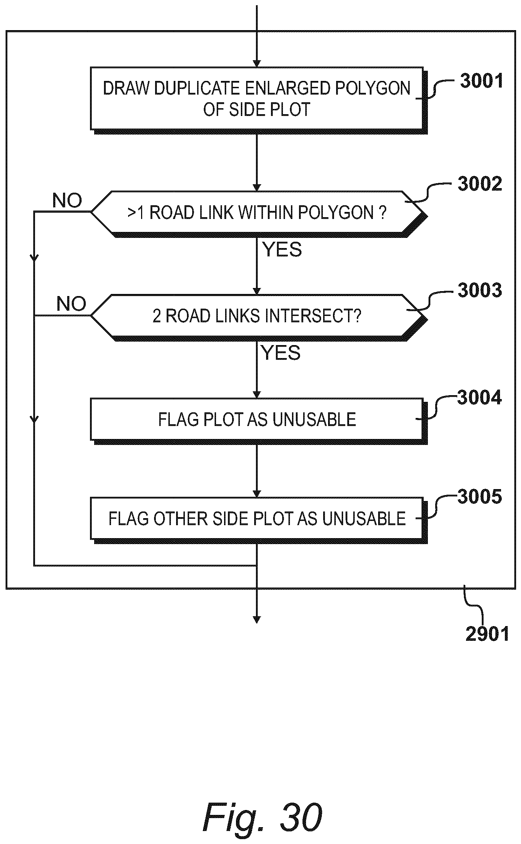

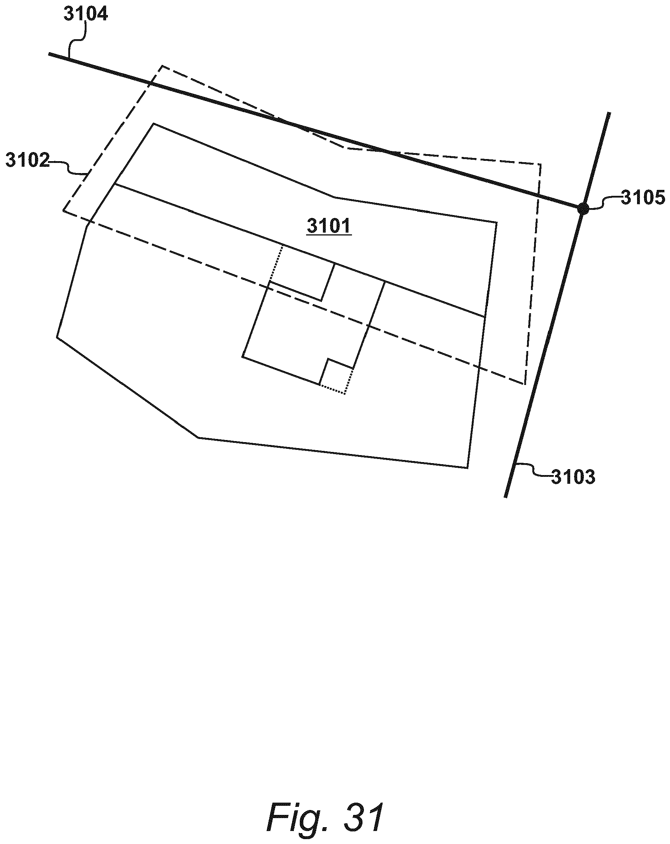

Figure 30 details step **2901,** at which a side plot is rejected if the candidate plot is at a corner of two roads, illustrated in Figure 31 .At step **3001,** the polygon defining the side plot is duplicated and enlarged by a suitable amount, usually the same as the amount used in step **1901** which in this embodiment is 5 metres and is a user-configurable variable. As shown in Figure 31, side plot **3101** has been duplicated and enlarged to create polygon **3102.**

At step **3002,** a question is asked as to whether the enlarged polygon 3102 intersects with more than one road link. If this question is answered in the affirmative then a further question is asked at step **3003** as to whether any of these road links intersect. In the example of Figure 30, polygon **3102** intersects with road links **3103** and **3104,** which intersect at point **3105.**

If the question asked at step **3003** is answered in the affirmative then the potential plot is on a corner, and it is flagged as unusable at step **3004.** Further, at step **3005** any other side plot identified in this candidate plot is also flagged as unusable, even if it has already been processed. Step **2101** is then exited, without proceeding to step **2902,** since the side plot is unusable.

At this point, and if either of the questions asked at steps **3002** or **3003** are answered in the negative, then step **2901** is concluded.

### Figures 32, 33a, 33b, 33c and 33d

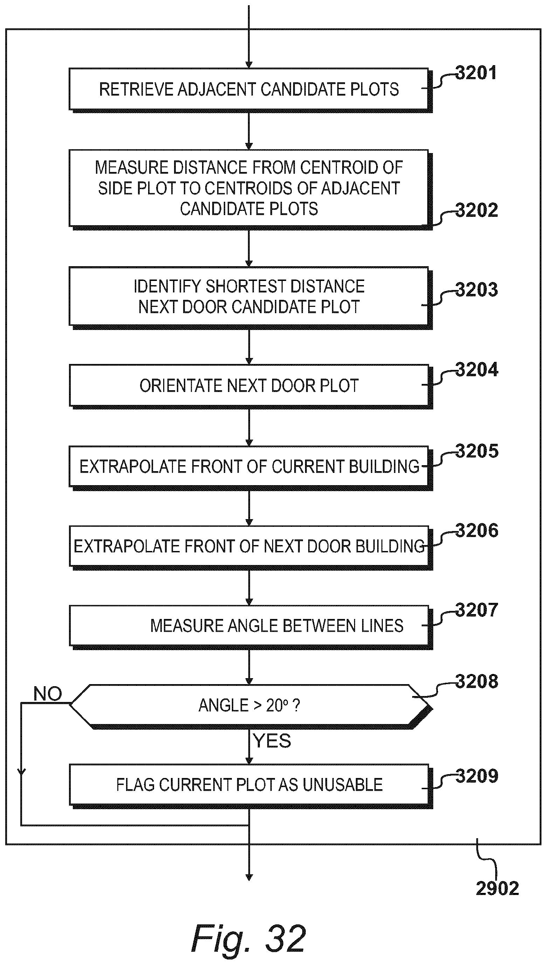

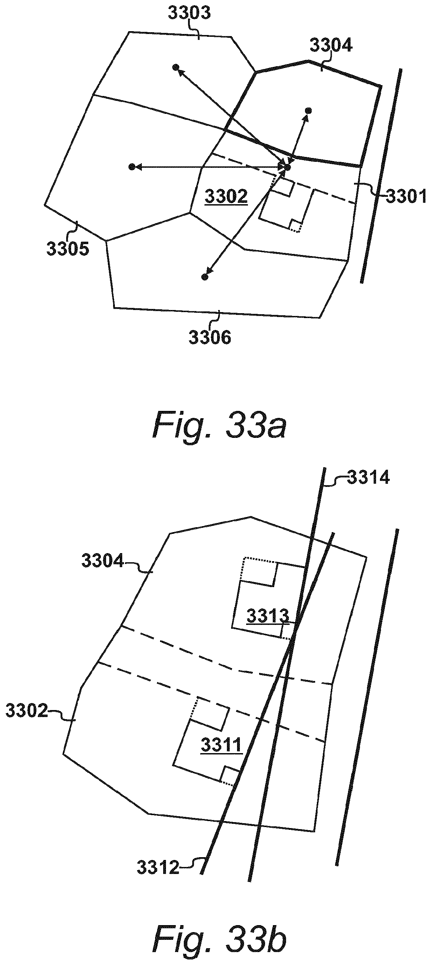

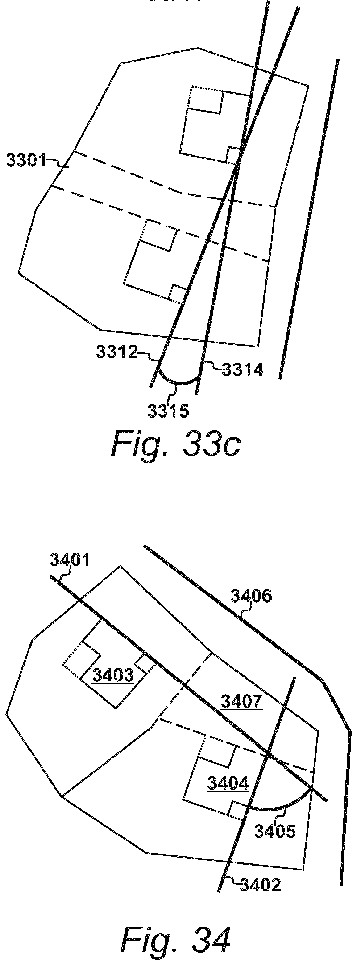

Figure 32 details step **2902,** at which a side plot is rejected if it is on a bend or hammerhead, illustrated in Figures 33a, 33b, 33c and 33d.

To determine this, it is first necessary to identify the candidate plot that is adjacent to the side plot. Thus, at step **3201** all the candidate plots adjacent to the current candidate plot are retrieved from table **403.** It does not matter whether they have been processed yet or not. At step **3202** the distances from the centroid of the side plot to the centroids of the adjacent candidate plots are measured, and at step **3203** the shortest distance is identified in order to identify the next-door plot. In Figure 33a, side plot **3301** of candidate plot **3302** is being considered. The distances from the centroid of side plot **3301** to the centroids of adjacent candidate plots **3303, 3304, 3305** and **3306** are measured. Distance **3307** to the centroid of plot **3304** is the shortest, and therefore plot **3304** is adjacent to side plot **3301.** This means it is the next-door plot to candidate plot **3302,** on the side of side plot **3301.**

To proceed, the process needs to identify the front of the buildings on both the current candidate plot and the next-door plot. The current candidate plot has already been orientated at step **603,** and the orientation of the next-door plot is obtained at step **3204.** If the next-door plot has already been processed, then this information will already be in potential plot data table **404.** If it has not been processed, then processing of this plot can be started in order to orientate it.

At steps **3205** and **3206,** a line is extrapolated from the front of the best-fit rectangle around each building, as can be seen in Figure 33b. The front of building **3311** on plot **3302** is extrapolated to line **3312.** The front of building **3313** on plot **3304** is extrapolated to line **3314.** The angle between these lines indicates whether the two buildings are roughly lined up along a straight or lightly-curved road, or whether a curve in the road has caused the front of one building to be considerably turned away from the other.

In Figure 33c, the angle **3315** between lines **3312** and **3314** is small, showing that the buildings **3311** and **3313** are roughly lined up. Side plot **3301** is a usable plot. However, in the alternative example of Figure 34, lines **3401** and **3402** have been extrapolated from the fronts of buildings **3403** and **3404** respectively. The angle **3405** between the lines is much larger, indicating that the fronts of the buildings are angled away from each other. This is caused by the bend in the road **3406,** and it can be seen that side plot **3407** is fully adjacent to the road and must therefore be considered unusable. The same would apply to a candidate plot at the top of a hammerhead.

Thus, at step **3207** the angle between the lines is measured, and at step **3208** a question is asked as to whether this angle is greater than 20°. This number is a user-configurable option. If this question is answered in the affirmative then the side plot is tagged as unusable at step **3209.** Unlike candidate plots on a corner, as considered during step **2901,** the other side plot in the candidate plot may well be usable and is therefore processed as normal.

### Figures 35 and 36

Step **2104,** at which access to a side plot is considered, is detailed in Figure 35 and illustrated in Figure 36. Usually, a side plot has access to the road link corresponding to the building address. However, where a house is built at an unusual angle to the road, or at the end of a driveway surrounded by other houses, this may not be the case. In addition, the method described herein may mis-identify a rear plot as a side plot, and in that case would not carry out the usual access checks associated with a rear plot. Thus, at this step, the method checks whether there is actually access to a side plot.

Thus, at step **3501** the shortest line is drawn from the centroid of the side plot to the road link identified at step **1001.** At step **3502** a question is asked as to whether this line intersects with any other candidate plot. If this question is answered in the negative then at step **3503** the intersection of this line with the road link is stored as a potential access point.

Alternatively, if the question is answered in the affirmative, then no action is taken and no access point is stored. The side plot will then be flagged as not viable at step **2106** because no access has been identified.

In the example of Figure 36, building **3602** stands on candidate plot **3601,** and it is associated with roadlink **3603.** Because of the sharp bend in road **3603,** and because building **3602** is set well back from the road, the furthest potential plot from road **3603** is the small area **3604** down the side of the building. This causes the method to orientate the building side-on, thus mis-identifying rear plot **3605** as a side plot. However, the shortest line **3606** from the centroid of side plot to road link **3603** passes through the adjacent candidate plot **3607,** and therefore no access is identified.

### Figure 37

Figure 37 details step **1405,** at which further optional checks on the plot are carried out. At this stage, potential plots have been processed and are either fully processed, or flagged as unusable or non-viable. Unusable plots cannot be used and are therefore generally not subject to further checks. Non-viable plots are probably not usable on their own but may be combined with other plots to create a viable plot. Depending on the nature of the further checks, they may also be omitted from this step.

Thus, depending on the data generated during steps **1402** and **1404,** step **3707** may be carried out or may be omitted. Although it is not specifically detailed herein, these further checks may also be carried out on assembled plots generated during step **314,** for example following step **2306** (see Figure 23).

The checks carried out at this stage provide further information on plots that may be of use to requesting users. At step **3701** a check is carried out to ascertain whether any building on the plot may require a fire suppression system. At step **3702** any other optional checks, not detailed herein, are carried out.

### Figures 38 and 39

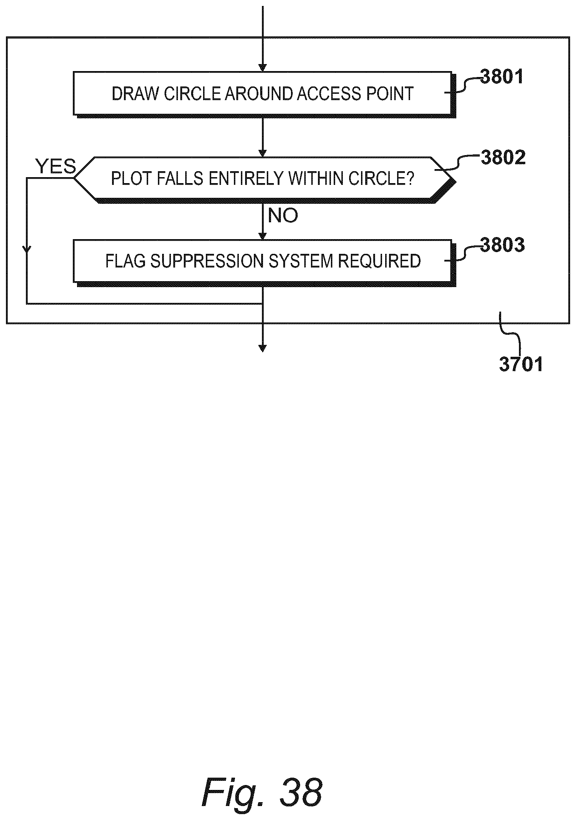

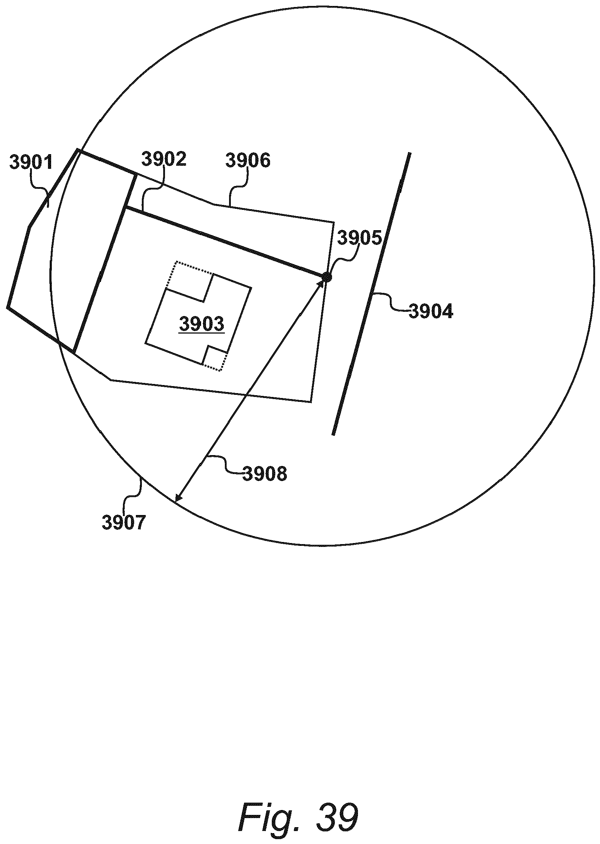

Step **3701** at which a fire suppression system check is carried out is detailed in Figure 38 and illustrated in Figure 39. Many countries have building regulations requiring a fire suppression system if a building is too far from the road for a fire engine hose to reach. In the UK, every corner of a building must be less than 65 metres from the road; this varies around the world and therefore the distance used in the check is a user-configurable variable.

Thus at step **3801** a circle of radius 65 metres is drawn. In this embodiment it is drawn around the access point that has been identified during processing of the potential plot and stored in access data **446;** in other embodiments or due to user-configurable conditions the circle may be centred on another point. As shown in Figure 39, a rear potential plot **3901** has been identified, and it has potential access shown by line **3902,** down the side of building **3903** to road link **3904.** The point **3905** where access line **3902** intersects with land boundary **3906** is the centre of the drawn circle **3907.** In this embodiment the radius **3908** is 65 metres.

At step **3802** a question is asked as to whether the potential plot falls entirely within the drawn circle. If this question is answered in the negative, then at step **3803** the potential plot is flagged as possibly requiring a fire suppression system (depending on which part of the plot is built on).

In Figure 39, it can be seen that part of plot **3901** falls outside circle **3907,** and thus this plot would be flagged for a fire suppression system.

## Claims

1. A method of automatically processing geospatial data, comprising the steps of:
obtaining base geospatial data relating to plots of land and buildings;
using said base geospatial data, identifying first geospatial data describing a first real-world plot of land and second geospatial data describing a first real-world building standing on it, said building having an unknown real-world orientation;
using said second geospatial data, creating a first polygon that encompasses said building;
using said first geospatial data:
identifying a portion polygon that is not in said first polygon, said portion polygon defining a portion of said plot of land, and identifying its orientation with respect to the real-world orientation of said first building; and
storing said portion polygon and data relating to said portion for display.

2. A method according to claim 1, wherein:
said first geospatial data comprises a second polygon, and said second geospatial data comprises a third polygon,
and optionally wherein said first polygon is the best-fit rectangle for said third polygon.

3. A method according to claim 2, wherein said step of identifying a portion polygon comprises the steps of:
selecting a first edge of said first polygon and extrapolating it to generate a first line that intersects with said second polygon;
segmenting said portion polygon using said first line to create at least two areas; and
identifying one of said areas that does not contain said first polygon as said portion polygon.

4. A method according to claim 3, wherein said step of identifying a portion polygon further comprises the steps of reducing the size of said portion polygon by:
generating a second line that is parallel to and at a first pre-determined distance from said first edge, and that intersects with said portion polygon;
segmenting said portion polygon using said second line to create at least two areas; and
discarding from said portion polygon the area closest to said first edge.

5. A method according to any of claims 1 to 4, wherein a first plurality of portion polygons are identified, and said step of identifying the orientation of a portion polygon with respect to the real-world orientation of the building comprises the steps of:
obtaining, from said base geospatial data, third geospatial data identifying a road associated with said building, said third geospatial data comprising a line;
for each of said first plurality of portion polygons, calculating a distance from said portion polygon to said line; and
using said distances to identify each of said portion polygons as defining a portion at the front, rear or side of the plot of land.

6. A method according to claim 5, further comprising the step of identifying a portion polygon as defining a portion on the left or right side of the plot, comprising the steps of:
identifying the portion polygon having the shortest distance to said line as the front polygon;
identifying one of said portion polygons as a first side polygon;
either:
identifying another of said portion polygons as a second side polygon and calculating the angle from a point in said first side polygon to a point in said second side polygon, or
calculating the angle from a point in said first side polygon to a point on the edge of said first polygon that is adjacent to said first side polygon;
wherein said angle is measured around a point in said front polygon; and
using said angle, determining whether said side polygon defines a portion on the left or right side of the plot.

7. A method according to either of claims 5 or 6, further comprising the step of determining whether a portion polygon identified as defining a portion at the rear of said plot has access to the front of the plot, comprising the steps of:
identifying the shortest distance from said first polygon to said second polygon at one side of the plot of land; and
if said distance is larger than a first threshold, identifying that said rear portion polygon has access to the front of the plot.

8. A method according to any of claims 5 to 7, further comprising the step of determining whether a portion polygon identified as defining a portion at the rear of said plot has access to a road, comprising the steps of:
generating a fourth polygon that is a duplicate of said portion polygon, enlarged by a second pre-determined distance;
identifying, from said base geospatial data, fourth geospatial data identifying a road, said fourth geospatial data comprising a line that intersects with said fourth polygon.

9. A method according to either of claims 5 or 6, further comprising the step of determining whether a portion polygon identified as defining a portion at the side of the building is adjacent to a road corner, comprising the steps of:
generating a fifth polygon that is a duplicate of said portion polygon, enlarged by a third pre-determined distance;
identifying, from said base geospatial data, one or more geospatial data identifying one or more roads, said one or more geospatial data comprising one or more lines that intersect with said fifth polygon; and
if more than one road has been identified, determining whether any of said lines intersect with each other.

10. A method according to either of claims 5 or 6, further comprising the step of determining whether a portion polygon identified as defining a portion at the side of the building is adjacent to a bend in the road, comprising the steps of:
using said base geospatial data, identifying a set of geospatial data, each describing a real-world plot of land that is adjacent to said first real-world plot of land, wherein said set may be empty; and
if said set is not empty:
identifying the closest plot of land in said set to said portion polygon, and identifying a sixth polygon encompassing a polygon that describes a second real-world building standing on it;
orientating said sixth polygon with respect to the real-world orientation of said second building;
calculating an angle between a line extrapolated from the front of said third polygon and a line extrapolated from the front of said sixth polygon; and
if said angle exceeds a second threshold, determining that said portion polygon is adjacent to a bend in the road,

11. A method according to any of claims 5, 6, 9 or 10, further comprising the step of determining whether a portion polygon identified as defining a portion at the side of said plot has access to a road, comprising the steps of:
determining the shortest line between the centroid of said portion polygon and the line in said third geospatial data; and
identifying whether said shortest line intersects with geospatial data in said base data describing another real-world plot of land.

12. A method according to any of claims 7, 8 or 11, further comprising the steps of determining whether a fire suppression system would be required for a hypothetical building built on the land defined by a portion polygon, by:
retrieving identified access details for the portion polygon, and determining the point on said second polygon where access will be achieved;
drawing a circle of a predetermined radius centred on said point; and
determining whether the portion polygon falls entirely within said circle.

13. A method of creating an assembled polygon, comprising the steps of:
carrying out the method of any of claims 1 to 12 a plurality of times, thereby identifying a plurality of first and second geospatial data describing real-world plots of land and real-world buildings, and identifying at least one portion polygon for each, to generate a second plurality of portion polygons;
identifying a set of said second plurality of portion polygons that are substantially adjacent to each other and therefore define a continuous real-world area;
generating an assembled polygon from said set of portion polygons, and storing said assembled polygon and data relating to said continuous real-world area for display.

14. Apparatus for automatically processing geospatial data, comprising a processor, storage and memory, wherein said processor is configured to carry out the steps of the method of any of claims 1 to 13.

15. A computer program comprising instructions which, when the program is executed by a computer, cause the computer to carry out the steps of the method of any of claims 1 to 13.

16. A computer-readable medium comprising instructions which, when executed by a computer, cause the computer to carry out the steps of the method of any of claims 1 to 13.
